# EUROPÄISCHE PATENTSCHRIFT

(11) **EP 1 815 650 B1**
(45) Veröffentlichungstag und Bekanntmachung des Hinweises auf die Patenterteilung: **18.03.2009**
(21) Anmeldenummer: 05817554.8
(22) Anmeldetag: 22.11.2005
(51) Int. Cl.: H04L 12/56, H04B 7/26

(54) **VERFAHREN ZUR SYNCHRONISATION UND DATENUEBERTRAGUNG**
SYNCHRONIZATION AND DATA TRANSMISSION METHOD
PROCEDE DE SYNCHRONISATION ET DE TRANSMISSION DE DONNEES DANS UN RESEAU A SAUTS MULTIPLES

(30) Priorität: 25.11.2004 DE 102004057080
(43) Veröffentlichungstag der Anmeldung: 08.08.2007
(73) Patentinhaber: Fraunhofer-Gesellschaft zur Förderung der angewandten Forschung e.V., 80686 München (DE)
(72) Erfinder: GÖPPNER, Matthias, 95326 Kulmbach (DE); HUPP, Jürgen, 90425 Nürnberg (DE); GEHRMANN, Volker, 91054 Erlangen (DE); FLÜGEL, Christian, 90409 Nürnberg (DE)
(74) Vertreter: Gagel, Roland
(86) Internationale Anmeldenummer: PCT/DE2005/002089
(87) Internationale Veröffentlichungsnummer: WO 2006/056174

(56) Entgegenhaltungen:
- US-A1- 2003 151 513
- US-B1- 6 735 448
- US-B1- 6 751 248

## Beschreibung

### Technisches Gebiet

Die Erfindung bezieht sich auf ein Verfahren zur Bildung eines synchronisierten Netzwerkes zur drahtlosen Kommunikation zwischen Sende-/Empfängereinheiten, den so genannten Knoten (KN) und einer zentralen Sende/Empfängereinheit, dem so genannten Zentralknoten (ZKN) in einem Multihop Netzwerk. Multihop Netzwerke finden in vielfältiger Weise im Bereich der Kommunikationstechnik Anwendung, bspw. bei der Überwachung von Infrastrukturelementen oder der Umweltüberwachung.

### Stand der Technik

Ein Multihop Netzwerk besteht grundsätzlich aus einer Vielzahl von Netzwerkknoten, die jeweils zumindest eine Sende-/ Empfangseinrichtung und eine Prozessoreinheit aufweisen. In Multi Hop Netzwerken werden Daten typischerweise von einem ersten Netzwerkknoten, der Datenquelle, über eine Anzahl als Relaisstationen dienende weitere Netzwerkknoten, so genannte Zwischenknoten zu einem zweiten Netzwerkknoten, der Datensenke, übertragen. Dabei sind der erste sowie der zweite Knoten grundsätzlich beliebig wählbar. Somit wird in einem Multi Top Netzwerk ein Datenaustausch zwischen Netzwerkknoten möglich, deren Sende- und Empfangsbereiche sich nicht überlappen, d.h. die keine direkte Datenkommunikation miteinander herstellen können. Dabei kann jeder Netzwerkknoten Datenquelle, Datensenke als auch Relaisstation sein. Allerdings müssen die einzelnen Netzwerknoten hierfür derart zueinander positioniert sein, dass sich im Sende-/ Empfangsbereichs eines Netzwerkknotens mindestens ein weiterer Netzwerkknoten befindet, so dass dadurch eine vermaschte Kommunikationsstruktur entstehen kann.

Ein Datenaustausch in einem Multi Hop Netzwerk erfolgt typischerweise im Wege der bidirektionalen drahtlosen Kommunikation, insbesondere im Wege der Funkkommunikation. Für einige Anwendungen können ein oder mehrere Netzwerkknoten durch von ihnen zu erfüllende zusätzliche Funktionen gegenüber den weiteren Netzwerkknoten ausgezeichnet sein. Dient bspw. ein Netzwerkknoten als zentrale Datensenke im Multihop Netzwerk, so ist dieser gegenüber den anderen Netzwerkknoten durch diese Funktion ausgezeichnet und wird im folgenden als Zentralknoten bezeichnet. Selbstverständlich kann dem Zentralknoten auch eine andere und/oder weitere zusätzliche Funktionen zugeordnet sein.

Nachteilig an den heute bekannten Verfahren zur Synchronisation und Kommunikation von Multihop Netzwerken ist der erhebliche Rechenaufwand bei den einzelnen Netzwerkknoten zum Aufbau, zur Aufrechterhaltung, zur stetigen Optimierung des Netzwerks und zur Datenkommunikation innerhalb des Netzwerks, sowie insbesondere der damit einhergehende hohe Stromverbrauch bei den einzelnen Netzwerkknoten.

Die Stromversorgung der einzelnen Netzwerkknoten erfolgt in vielen Anwendungen durch eine Batterie. Um die einzelnen Netzwerkknoten möglichst lange mit Batterie zu betreiben, muss daher der Stromverbrauch für den Betrieb möglichst gering sein. Auch für Zentralknoten, die viele Datenpakete weiterleitet, muss eine bestimmte Lebensdauer erreicht werden. Dies erfordert einen geringen Duty Cycle. Der Duty Cycle ist das Verhältnis von Aktivzeit, d.h. aktiver Kommunikation, zu Schlafzeit, d.h. nicht aktiver Kommunikation eines Knotens. Weiterhin nachteilig ist, dass bei den entsprechenden heute bekannten Verfahren durch Kollisionen bei der Funkkommunikation das an sich bekannte so genannte "Hidden Node" Problem auftreten kann. Dadurch ist der "Hidden Node", d.h. der entsprechende Knoten, vom Netzwerk nicht erreichbar.

Die US 6751248 B1 beschreibt ein Verfahren zur Herstellung und Aufrechterhaltung der Synchronisation zwischen Knoten und einem Masterknoten in einem Multihop-Netzwerk. Hierbei werden sog. Elternknoten ausgewählt, die das gesamte Netzwerk abdecken. Die Elternknoten senden Synchronisationsinformation regelmäßig an den Rest des Netzwerkes. Elternknoten, die nicht interferieren, senden diese Synchronisationsinformation gleichzeitig. Eine Zeitmultiplexstruktur stellt sicher, dass jeder Knoten regelmäßig Synchronisationsinformation erhält.
Die US 2003/0151513 A1 beschreibt ein selbstorganisierendes hierarchisches drahtloses Netzwerk, das ein Clusterkopf-Netzwerk mit zumindest einem Clusterkopf und ein Sensor/Aktuator-Netzwerk umfasst, das in einer hierarchischen Art und Weise mit dem Clusterkopf-Netzwerk angeordnet ist. Als ein Beispiel wird ein sog. ad-hoc-Multihop-Netzwerk genannt, das sich selbst konfiguriert. Die Synchronisation kann dabei über geeignete Beacon-Signale erfolgen.
Die US 6735448 B1 beschreibt ein Energiemanagement zur Reduzierung des Energieverbrauchs in drahtlosen ad-hoc-Netzwerken bei gleichzeitiger Erhöhung des Durchsatzes. Dies erfolgt durch individuelle Steuerung der Übertragungsleistung der einzelnen Knoten in Abhängigkeit von der individuellen Übertragungsdistanz. Durch eine Übertragungsstrategie, bei der mögliche Interferenzen minimiert und die Anzahl der erforderlichen Hops für eine Übertragung minimiert werden, können Kollisionen und Neuübertragungen vermieden und so der Datendurchsatz erhöht werden.

Die Aufgabe der vorliegenden Erfindung besteht darin, ein Verfahren zur kollisionsfreien Synchronisation und Kommunikation in einem Multihop Netzwerk anzugeben, das sich durch einen geringen Stromverbrauch sowie durch einen niedrigen Duty Cycle auszeichnet. Das Verfahren soll die aufgeführten Probleme bisheriger Verfahren zumindest größtenteils vermeiden. Insbesondere soll es möglich sein redundante Kommunikationswege zu erzeugen, um die Ausfallsicherheit zu erhöhen. Weiterhin soll das "Hidden Node" Problem vermieden werden.

### Darstellung der Erfindung

Die Aufgabe wird mit dem Verfahren gemäß Patentanspruch 1 gelöst. Vorteilhafte Ausgestaltungen des Verfahrens sind Gegenstand der Unteransprüche oder lassen sich der nachfolgenden Beschreibung sowie der Ausführungsbeispiele entnehmen.

Das erfindungsgemäße Verfahren zeichnet sich durch folgende Verfahrensschritte aus:
a) Aussenden eines Synchronisationssignals durch den Zentralknoten oder einen bereits synchronisierten Knoten, wobei ein durch den das Synchronisationssignal sendenden Knoten festgelegter Slot im Frame des Synchronisationssignals, der so genannte Beaconslot, mit einem Datenpaket, dem so genannten Beacon, belegt wird und zumindest der Hop Count Wert des sendenden Knotens im Frame des Synchronisationssignals übertragen wird, und für alle bereits synchronisierten Nachbarknoten des sendenden Knotens, die dem sendenden Knoten bekannt sind Übertragen der jeweiligen Beaconslots und Hop Count Werte im Frame des Synchronisierungssignals oder als separates Datensignal durch den sendenden Knoten,
b) Empfangen des Synchronisationssignals sowie der in Zusammenhang damit übermittelten Daten durch einen im Sende-/Empfangsbereich des sendenden Knotens liegenden ersten Knotens,
c) Synchronisieren des ersten Knotens auf das Synchronisierungssignal,
d) Ermitteln der Nachbarn des ersten Knotens sowie deren jeweiliger Beaconslotbelegung und Hop Count Werte durch den ersten Knoten,
e) Festlegen des Vorgängers des ersten Knotens im Netzwerk durch den ersten Knoten auf Basis vorgegebenen Kriterien,
f) Speichern der mit dem Synchronisationssignal sowie in Zusammenhang damit empfangenen sowie daraus ermittelten Daten durch den ersten Knoten,
g) Wiederholen der Schritte a) bis f) zumindest bis zur Synchronisation aller Knoten.

Das erfindungsgemäße Verfahren zur Synchronisation und Kommunikation basiert auf einem Multi Hop Netzwerk, das einen Zentralknoten und mehrere Knoten aufweist. Das Netzwerk kann unbegrenzt groß sein, d.h. das Netzwerk kann beliebig viele Knoten umfassen. Das Verfahren dient zudem der Aufrechterhaltung der Synchronisation im Normalbetrieb des Netzwerks.
Der Zentralknoten wie auch die Knoten weisen jeweils eine Sende-/Empfängereinheit, eine Speichereinheit sowie eine Prozessoreinheit auf. Die einzelnen Knoten können ortsfest oder mobil sein. Die Stromversorgung der Konten und des Zentralknotens erfolgt über Akkumulatoren, das Stromnetz oder wird vor Ort bspw. durch Solarzellen erzeugt. Der Zentralknoten und die Knoten sind dabei räumlich derart zueinander positioniert, dass sich im Sende-/Empfangsbereich jedes Knotens mindestens ein weiterer Knoten oder der Zentralknoten befindet. Jeder Knoten steht damit zumindest mit einem weiteren Knoten oder dem Zentralknoten in direkter Kommunikationsverbindung. Die Kommunikation zwischen einem Knoten, der sich außerhalb des Sende-/Empfangsbereich des Zentralknotens befindet und dem Zentralknoten erfolgt unter Einbeziehung weiterer Knoten als Relaisstationen (so genannte Zwischenknoten) über eine Multi Hop Kommunikation. Damit ist es möglich, dass Knoten, die nicht über eine direkte Kommunikationsbeziehung zum Zentralknoten verfügen, ihre Daten über die Zwischenknoten an den Zentralknoten übermitteln.

Der Zentralknoten zeichnet sich gegenüber den anderen Knoten im Netzwerk dadurch aus, dass er als Bezugspunkt für die Kommunikationswege im Netzwerk und zudem als Zeitbasis für die Synchronisation der Netzwerkknoten, und damit des gesamten Netzwerkes dient. Nach erfolgter Synchronisation des Netzwerkes leiten daher alle Knoten ihre Zeitbasis vom Zentralknoten ab. Selbstverständlich können vom Zentralknoten weitere Funktionen im Netzwerk übernommen werden, bspw. kann er als zentrale Datensenke dienen oder er kann das Netzwerk steuernde Aufgaben haben. Durch die Zusatzfunktionen des Zentralknotens kann sich die Hardwareausstattung des Zentralknotens von den anderen Knoten, bspw. durch einen größeren Speicher oder eine höhere Rechenleistung, unterscheiden.

Für die weiteren Ausführungen sollen folgende begrifflichen Festlegungen gelten:
- Alle Knoten, die innerhalb der Sende-/Empfangsreichweite eines Knotens liegen, werden als dessen Nachbarn bezeichnet.
- Die für eine Kommunikation zwischen einem Knoten und dem Zentralknoten erforderliche und um Eins erhöhte Anzahl der Zwischenknoten bezeichnet den so genannten Hop Count Wert dieses Knotens.
- Alle Knoten mit gleichem Hop Count Wert bilden eine so genannte Schicht.
- In einer gegebenen Kommunikationskette mit mehreren Zwischenknoten sei ein Zwischenknoten mit dem Hop Count Wert i herausgegriffen. Der Zwischenknoten der Kommunikationskette mit dem Hop Count Wert i-1 wird als Vorgänger des Zwischenknotens mit dem Hop Count Wert i, derjenige mit dem Hop Count Wert i+1 als dessen Nachfolger bezeichnet.
- Der Zentralknoten und die weiteren Knoten des Netzwerkes bilden in ihrer Gesamtheit die Knoten. Kommt es in der folgenden Beschreibung auf eine Unterscheidung des Zentralknotens von den anderen Knoten an, so wird der Begriff "Zentralknoten" explizit verwandt, wird auf die Gesamtheit aller Knoten, d.h. einschließlich des Zentralknotens, abgestellt, so wird der allgemeine Begriff "Knoten" verwandt.

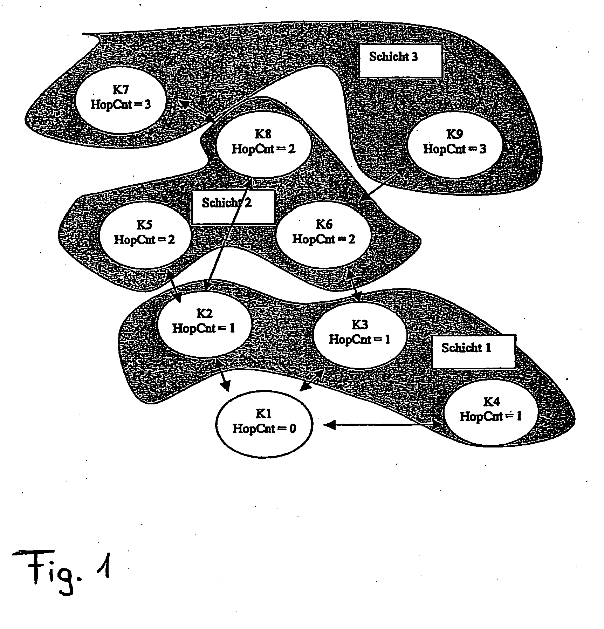

Die Figur 1 verdeutlicht diese begrifflichen Festlegungen am Beispiel eines Multi Hop Netzwerkes, bestehend aus einem Zentralknoten K1 und den Knoten K2 - K9. Die einzelnen verteilten Knoten sind durch Ellipsen dargestellt. Die zwischen den Ellipsen dargestellten Pfeile geben die bestehende Kommunikationsstruktur im Netzwerk wieder. Die Ellipsen geben zudem die den einzelnen Knoten zugewiesene Kennung bzw. den sich aus der bestehenden Kommunikationsstruktur ergebenden Hop Count Wert an. So ist dem Zentralknoten der Hop Count Wert 0 zugewiesen.

Der Figur 1 ist zu entnehmen, dass sich die Sende-/Empfangsbereiche von K1, K2, K3 und K4 überlappen, da K2, K3 und K4 direkt mit K1 kommunizieren können (Pfeile), d.h. zur Kommunikation ist kein Zwischenknoten erforderlich. Entsprechend der vorstehend beschriebenen Festlegung wird demzufolge K2, K3 und K4 jeweils der Hop Count Wert = 1 zugeordnet. K2, K3 und K4 bilden somit auch die erste Schicht um den Zentralknoten, d.h. die Schicht, die durch den gemeinsamen Hop Count Wert = 1 definiert wird. Die Zuordnung eines bestimmten Hop Count Wertes zu einem Knoten, sowie dessen Zuordnung zu einer Schicht hängt dabei von dem tatsächlich aktuell gewählten Kommunikationsweg ab. Ändert sich dieser, kann sich auch der Hop Count Wert bzw. die Schichtzugehörigkeit eines Knotens ändern. Würde bspw. die Kommunikation zwischen K4 nicht direkt mit K1, sondern über die Kette K4 - K3 - K1 erfolgen (nicht dargestellt), so würde K4 der Hop Count Wert = 2 zugeordnet werden, da für die Kommunikation mit K1 ein Zwischenknoten (K3) erforderlich ist und die um Eins erhöhte Zahl der erforderlichen Zwischenknoten daher zwei ergibt.

In analoger Weise ergeben sich, die in Figur 1 dargestellten Zuordnungen des Hop Count Wertes 2. zu Knoten K5, K8 und K6 sowie des Hop Count Wertes 3 zu Knoten K7 und K9. - Der jeweils gleiche Hop Count Wert bestimmt somit auch die Zugehörigkeit der Knoten K5, K6 und K8 zur Schicht 2 sowie der Knoten K7 und K9 zur Schicht 3. Die einzelnen Schichten sind in Figur 1 als diejenigen Knoten dargestellt, die gemeinsam von einer dunklen Fläche eingeschlossen werden.

Die Kommunikation zwischen den einzelnen Knoten im Multi Hop Netzwerk beruht auf einer drahtlosen Datenübertragung in Frames, die in definierte Slots unterteilt sind. Vorzugsweise finden dabei bidirektionale Kommunikationsverfahren, insbesondere Funkverfahren Anwendung, die folgende Datenübertragungsprotokolle verwenden: Time Division Multiple Access (TDMA), Frequency Division Multiple Access (FDMA), Code Division Multiple Access (CDMA). Unterteilungen des Frames in Datenbereiche, vorzugsweise in einen Synchronisations-, Nachbarknoten- und Datenbereich, kommen je nach Anwendung in Betracht, um so bspw. gleichzeitig normale Kommunikationsdaten und Daten, die der Synchronisation, der Aufrechterhaltung sowie der Optimierung der Netzwerkstruktur dienen, in einem Frame zu versenden. In einer weiteren vorteilhaften Ausgestaltung des Verfahrens kann durch eine Parametrierung die Framestruktur, d.h. die Framedauer, die Anzahl der Slots oder die Unterteilung des Frames in Bereiche, das Netzwerk im laufenden Betrieb an besondere Bedingungen angepasst werden.

Erfindungsgemäß wird bei dem Verfahren vom Zentralknoten oder von einem bereits synchronisierten Knoten ein Synchronisationssignal ausgesandt, wobei ein durch den sendenden Knoten festgelegter Slot im Frame des Synchronisationssignals, der so genannte Beaconslot, belegt wird. Ein einmal von einem sendenden Knoten festgelegter Beaconslot wird grundsätzlich auch für die Aussendungen weiterer Synchronisationssignale durch den jeweiligen Knoten beibehalten. Ausnahmen hiervon werden nachfolgend gesondert beschrieben.

Weiterhin werden mit jedem Synchronisierungssignal oder als separat gesendetes Datenpaket in Zusammenhang mit einem Synchronisierungssignal zumindest folgende Daten ausgesandt: für alle bereits synchronisierten Nachbarn des sendenden Knotens, die jeweils durch diese Nachbarn bereits belegten Beaconslots sowie die jeweiligen Hop Count Werte dieser Nachbarn. In einer vorteilhaften Fortbildung des Verfahrens werden zusätzlich jeweils auch die von den bereits synchronisierten direkten Nachbarn eines sendenden Knotens belegten Beaconslots sowie deren Hop Count Werte übertragen. In einer weiteren Fortbildung des Verfahrens wird zusätzlich die Anzahl der Nachfolger des sendenden Knotens im Netzwerk übertragen.

Der einem Knoten derart zugeordnete Beaconslot sowie der Hop Count Wert haben im Netz zu einem Zeitpunkt die Funktion einer individuellen Kennung, die für die direkten Nachbarn eindeutig ist. Weiterhin wird dadurch eine kollisionsfreie Kommunikation zwischen den Knoten ermöglicht. Eine zusätzliche individuelle Kennung jedes Knotens im Netz ist somit nicht erforderlich aber selbstverständlich möglich und für bestimmte Anwendungen des Verfahrens sogar erforderlich.

Die Synchronisationssignale bzw. die damit in Zusammenhang stehenden Datenpakete werden von allen Nachbarn des sendenden Knotens, d.h. sowohl von den bereits synchronisierten als auch von den noch nicht synchronisierten Nachbarn, empfangen und jeweils ausgewertet. Die noch nicht synchronisierten Nachbarn erhalten mit dem Synchronisierungssignal eine Zeitbasis auf die eie sich synchronisieren. Die bereits synchronisierten Nachbarn des Knotens benutzen das Synchronisationssignal in vorteilhafter Weise für eine Überprüfung ihrer Synchronisation.

Bei der Auswertung der empfangenen Daten durch einen Knoten werden zumindest die aktuellen lokalen Nachbarschaftsbeziehungen des jeweiligen Knotens inklusive der in der lokalen Umgebung bereits bestehenden Kommunikationsstruktur, d.h. insbesondere die jeweilige Beaconslotbelegung und die Hop Count Werte seiner bereits synchronisierten Nachbarn ermittelt und gespeichert. In vorteilhafter Weise werden zusätzlich auch die jeweilige Beaconslotbelegung und die Hop Count Werte seiner bereits synchronisierten übernächsten Nachbarn ermittelt und gespeichert.

Infolge der mit dem Synchronisationssignale übertragenen aktuellen Nachbarschaftsdaten erkennt ein noch nicht synchronisierter Knoten, welche Beaconslots durch seine Nachbarn bereits belegt sind. Er ermittelt selbständig einen Beaconslot für die Aussendung seines eigenen Synchronisierungssignals, der zumindest bis zu seinen übernächsten Nachbarn unbelegt ist. So wird jeder belegte Beaconslot grundsätzlich bis zur übernächsten Schicht geschützt. In einer Fortbildung des Verfahrens wird neben der Beaconslotbelegung der direkten Nachbarn auch diejenige der übernächsten Nachbarn des Knoten berücksichtigt. Durch die damit mögliche kollisionsfreie Kommunikation wird das so genannte "Hidden Node" Problem vermieden, wie später noch eingehender erläutert wird.
Auf Basis der ermittelten aktuellen Nachbarschaftsdaten und/oder weiterer Daten, wie bspw. der Signalstärke des empfangenen Synchronisationssignals, erfolgt, unter Zugrundelegung vorgegebener Kriterien, durch den jeweiligen Knoten die Festlegung seines Vorgängers im Netzwerk. Dadurch entsteht innerhalb des Multi Hop Netzwerkes eine durch die vorgegebenen Kriterien bestimmte Kommunikationsstruktur. Vorzugsweise wird jeder Knoten veranlasst, denjenigen Knoten als Vorgänger zu wählen, welcher:
a) in seiner Kommunikationskette die wenigsten Zwischenknoten zum Zentralknoten hat, d.h. welcher den geringsten Hop Count Wert hat, oder
b) die wenigsten Nachfolger hat, oder
c) dessen Signale mit der größten Signalstärke vom Knoten empfangen werden.

Es können bei der Wahl des Vorgängers weitere Kriterien, einbezogen und/oder die aufgeführten sowie die weiteren Kriterien beliebig kombiniert werden. Durch die Festlegung des Vorgängers wird von jedem Knoten seine Kommunikationskette zum Zentralknoten ausgewählt.

Mit der entsprechenden Auswahl des Vorgängers weist sich der Knoten des weiteren selbst einen um die Zahl Eins höheren Hop Count Wert als der Hop Count Wert des ausgewählten Vorgängers zu.

Im Normalbetrieb, d.h. nachdem alle Knoten synchronisiert sind und der reguläre Datenaustausch im gesamten Netzwerk abläuft, empfängt jeder Knoten weiterhin das Synchronisationssignal seines Vorgängers, um die Synchronisation aufrechtzuerhalten, und verschickt sein eigenes Synchronisationssignal, um seine Nachfolger zu erreichen. Der Knoten tauscht mit seinen Nachbarknoten Datenpakete aus. Im Hintergrund ermittelt er ständig seine aktiven Nachbarn und erkennt so Veränderungen zumindest in der lokalen Netzwerkstruktur.

Ändern sich die lokalen Nachbarschaftsbeziehungen für einen Knoten für zwei aufeinander folgende von ihm empfangene Synchronisierungssignale, bspw. durch Hinzutreten weiterer synchronisierter Nachbarknoten im Netz oder durch Entfernen oder Versagen von bereits synchronisierten Nachbarknoten, so wird dies vom Knoten durch Vergleich der aktuell empfangenen Nachbarschaftinformationen mit den gespeicherten vorhergehenden Nachbarschaftsinformationen erkannt. Das erfindungsgemäße Verfahren führt dazu, dass sich das Netzwerk auf Veränderungen im Netzwerk stets anpasst. Wird bspw. der Vorgänger eines Knotens aus dem Netz entfernt, so wird der Knoten einen neuen Vorgänger gemäß der vorgegebenen Kriterien bestimmen.
Wurde durch das Verfahren ein bisher nicht synchronisierter Knoten synchronisiert, so trägt er seinerseits durch Aussenden eigener Synchronisationssignale zur Synchronisation weiterer Knoten bei Der Knoten kann nach dem Empfang des ersten Synchronisationssignals bereits an der normalen Datenkommunikation des bereits synchronisierten Multi Hop Netzwerks teilnehmen. Die beschriebenen Verfahrensschritte werden zumindest so oft wiederholt bis alle Knoten im Netzwerk synchronisiert sind. Vorzugsweise wird das Verfahren jedoch parallel zur Normalkommunikation betrieben.

Nach der allgemeinen Beschreibung des erfindungsgemäßen Verfahrens soll nun nochmals auf die konkreten Schritte zu Beginn des Verfahrens eingegangen werden.

Zu Beginn der Synchronisierung sendet zunächst nur der Zentralknoten Synchronisationssignale aus. Die anderen Knoten nehmen einen Empfangsmodus (Sniff Modus) ein. Der Zentralknoten kann daher vor der Aussendung seines ersten Synchronisationssignals jeden beliebigen Beaconslot, bspw. den Beaconslot 1, belegen. Für den Zentralknoten beträgt der Hop Count Wert bspw. 0. Da der Zentralknoten zu Beginn der Synchronisation zunächst keinen seiner Nachbarknoten erkennt, sind seinem Synchronisationssignal nur der belegte Beaconslot = 1 sowie der Hop Count Wert = 0 zu entnehmen. Die Nachbarknoten des Zentralknotens empfangen das beschriebene Synchronisierungssignal des Zentralknotens, speichern die dabei übermittelten Daten bzw, werten diese aus und synchronisieren ihre jeweilige Zeitbasis auf die Zeitbasis des Zentralknotens. Anschließend senden die bereits synchronisierten Knoten ihrerseits kollisionsfrei ihr eignes Synchronisierungssignal aus, so dass sich die weiter von dem Zentralknoten entfernt liegenden Knoten synchronisieren können. Dabei werden die jeweils noch freien Beaconslots belegt, d.h. im vorliegenden Beispiel die Beaconslots 2, 3, 4, usw. sowie beim sendenden Knoten vorliegende Nachbarschaftsinformationen übertragen. So überträgt der erste auf den Zentralknoten synchronisierte Knoten (K1) bspw. folgende Daten: durch K1 festgelegter Beaconslot = 2, Hop Count Wert von K1 = 1, sowie die Nachbarschaftsinformation: Nachbar mit Hop Count Wert = 0 und Beaconslot 1. Diese Daten werden von den Nachbarn des K1 empfangen, ausgewertet und gespeichert. Die im Laufe des Verfahrens synchronisierten Nachbarknoten des Zentralknotens bilden so die erste synchronisierte Schicht um den Zentralknoten, die weiter entfernt liegenden die zweite synchronisierte Schicht usw. bis alle Knotensynchronisiert sind. Ist kein Beaconslot mehr frei, so wird der Knoten zu einem Endknoten.

Durch das erfindungsgemäße Verfahren muss nach Empfang eines Synchronisationssignals nur eine begrenzte Zahl von Beaconslots analysiert werden, weil belegte Beaconslots nach drei Schichten durch andere Knoten wieder verwendet werden können. Damit ist das Verfahren sehr energieeffizient und führt zu einem deutlich geringeren Energiebedarf als bisher bekannte Verfahren. Das Verfahren ermöglicht zudem ein Netzwerkabbild, weil alle Nachbarbeziehungen zwischen Knoten zu einem Zeitpunkt grundsätzlich bekannt sind und damit auch zur Überprüfung von Kommunikationswegen dienen können. Weiterhin ergeben sich zusammenfassend durch Anwendung des erfindungsgemäßen Verfahrens folgende Vorteile gegenüber dem Stand der Technik:
- Ein beliebig großes Netzwerk synchronisiert sich auch unter schwierigsten Ausbreitungsbedingungen auf einen Zentralknoten.
- Alle Nachbarknoten werden mit geringstem Energieaufwand entdeckt.
- Indirekte Kollisionen durch Hidden Nodes werden vermieden, da die Informationen welche Beaconslots belegt sind den Nachbarn mitgeteilt werden.
- Es wird eine optimale Kommunikationsstruktur erreicht.
- Das Netzwerk passt sich automatisch Veränderungen, bspw. durch Hinzufügen oder Entfernen von Knoten aus dem Netzwerk oder veränderten Funkausbreitungsbedingungen, an.

### Kurze Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Prinzipschaubildes eines Multi Hop Netzwerkes;
- Fig. 2: Darstellung des Frames eines Synchronisationssignals, d.h. eines entsprechenden Zeitrahmens mit Synchronisations-, Nachbarschaftsknoten- sowie Datenbereich;
- Fig. 3: Darstellung eines Zeitrahmens zur Erläuterung einer Version des Sniff Modus;
- Fig. 4: Darstellung eines Zeitrahmens zur Erläuterung einer weiteren Version des Sniff Modus;
- Fig. 5: Darstellung zur Erläuterung des Basis Link;
- Fig. 6: Darstellung zur Erläuterung des Hidden Node Problems;
- Fig. 7: Verfahrensablauf für einen Knoten;
- Fig. 8: Aufbau der Kommünikationsstruktur im Netzwerk;
- Fig. 9: Kommunikationsstruktur zwischen einem Zentralknoten und einer Vielzahl von Sensorknoten über so genannte Repeaterknoten; und
- Fig. 10: Kommunikationsstruktur wie in Figur 9 mit Darstellung der Sende-/ Empfangsbereiche einzelner Knoten.

### Wege zur Ausführung der Erfindung

Das erste Ausführungsbeispiel beschreibt eine Ausführungsform des erfindungsgemäßen Verfahrens zur Synchronisation, Kommunikation in einem verteilten Multi Hop Netzwerk, mit einem Zentralknoten und mehreren Knoten. In diesem unbegrenzt großen Multi Hop Netzwerk werden Daten einerseits von den Knoten zum Zentralknoten geschickt werden, andererseits ist auch der umgekehrte Weg möglich. Es kann dabei ein niedriger Duty Cycle von ca. 0,02% zum Senden/Empfangen von Daten realisiert werden, um eine lange Lebensdauern der batteriebetriebenen Sensoren zu gewährleisten. Jeder Knoten entdeckt dabei regelmäßig und mit geringem Energieaufwand alle seine Nachbarknoten. Es wird die optimale Verbindung zu dem Zentralknoten im laufenden Betrieb gefunden und es ist kein manueller Eingriff zur Installation bzw. zum Finden von Ausfallrouten nötig.

Die nachfolgend beschriebene Synchronisation des Netzwerkes ist Voraussetzung für viele energiesparende Datenübertragungsverfahren.

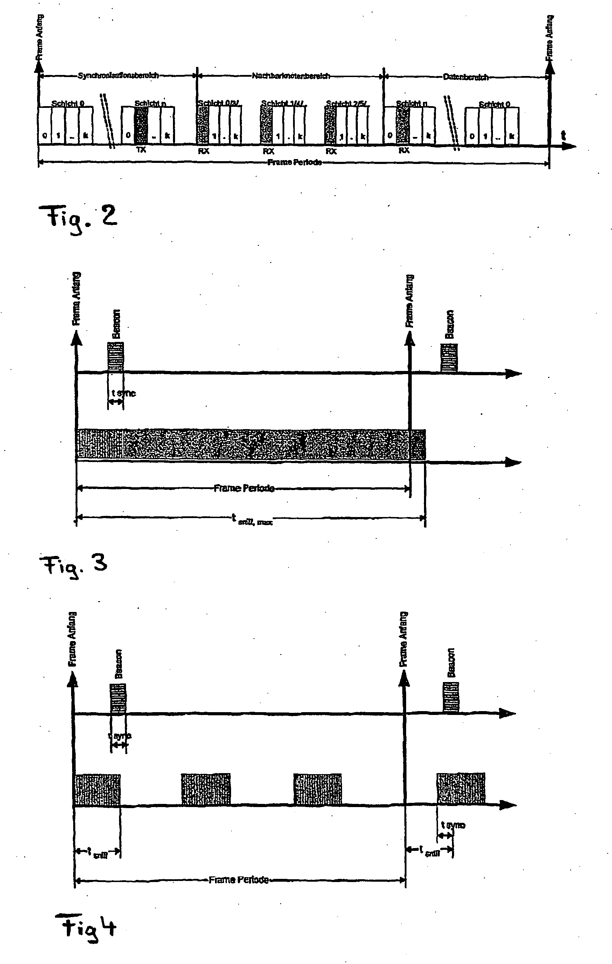

Figur 2 zeigt die in diesem Ausführungsbeispiel vorzugsweise gewählte Framestruktur für das Synchronisationssignal. Die Framestruktur wird zunächst durch einen Framezeitrahmen mit einem Frameanfang und einer Frame Periode (= Framedauer) definiert. Der Frame selbst ist in einen Synchronisationsbereich, einen Nachbarknotenbereich sowie einen Datenbereich unterteilt. Im Synchronisationsbereich sind die einzelnen Beaconslots angeordnet. Im Nachbarknotenbereich wird die Beaconslotbelegung der Nachbarknoten mitgeteilt. Im Datenbereich erfolgt die eigentliche Datenkommunikation des Netzwerkes.
Jeder Knoten ist zu einem bestimmten Zeitpunkt durch seinen Hop Count Wert h mit 0 ≤ h ≤ n und dem Beaconslot s mit 0 ≤ s s k identifizierbar. Der höchste Hop Count Wert in dem in Figur 2 dargestellten Beispiel ist n, der höchste Beaconslotwert ist k. Der durch h und s gekennzeichnete Knoten sendet seinen Beacon im Beaconslot s und der Schicht h des Synchronisationsbereichs. Dem Knoten wird darüber hinaus in jedem der drei Framebereiche jeweils einen Slot zugewiesen, der durch die Schicht h und den Beaconslot s des jeweiligen Knotens bestimmt ist. Weil die Schichten in den Bereichen aufsteigend sortiert sind, breitet sich der Beacon in kurzer Zeit bis in die letzte Schicht n des Netzwerks aus.

Im Datenbereich besitzt jeder Knoten in Schicht h und Slot s einen bidirektionalen Datenslot zur Kommunikation mit seinen Nachfolgern. In dem Beacon legt der jeweilige Knoten die Übertragung zu seinen Nachfolgern oder Vorgängern fest. Optional kann ein Konten damit ein exklusives Senderecht an einen bestimmten Nachfolger vergeben. Im Nachbarknotenbereich werden die Belegungsinformationen der Beaconslots der Nachbarknoten übertragen. Er ist grundsätzlich wie der Synchronisationsbereich aufgebaut, mit dem Unterschied, dass nach drei Schichten die erste Schichtgruppe wieder verwendet wird. Synchronisations- und Nachbarknoteninformationen können optional auch zu einem Paket zusammengefasst werden. In diesem Fall ist der Frame nur in einen Synchronisationsbereich und einen Datenbereich unterteilt. Ein Paket mit Nachbarknoteninformationen enthält wesentliche Informationen zu den Nachbarn eines Knotens, wie:
- durch Nachbarn belegte Beaconslots,
- jeweilige Vorgänger,
- Anzahl der jeweiligen Nachfolger, sowie
- weitere lokale Informationen.

Hat ein Knoten diese Informationen von allen Nachbarn gesammelt, kann er seinen optimalen Vorgänger und einen freien Beaconslot bestimmen. Dadurch entsteht ein kollisionsfreies Netzwerk mit ausgeglichenen Verästelungen zum Zentralknoten.

Im Ausführungsbeispiel wechseln sich die Knoten Frame für Frame mit dem Senden der Nachbarknoteninformationen ab. Durch die im Synchronisationsbereich belegten Beaconslots wird festgelegt, wann welcher Knoten die Nachbarknoteninformationen sendet.
Jeder auf den Zentralknoten synchronisierte Knoten empfängt in einem bestimmten Beaconslot den Beacon seines Vorgängers bzw. eines Nachbarn und sendet einen eigenen Beacon mit einem Synchronisationssignal aus. Durch den Empfang eines Beacons im Synchronisationssignal synchronisiert sich ein Knoten auf den Frame Anfang. Die Synchronisierung erfolgt ausschließlich durch die Beacons im Beaconslot und ist somit unabhängig vom Konzept der Datenübertragung.
Im Datenbereich des Frames sind mehrere Datenslots vorgesehen. In diesen Datenslots können die Knoten Datenpakete an ihre Nachbarn senden. Die Werte für Hop Count und Beaconslot können zur Strukturierung des Datenbereichs verwendet werden, um Kollisionen zu reduzieren. Das Verfahren zur Datenübertragung selbst ist im vorgegeben Rahmen weitgehend beliebig und dem Fachmann bekannt.
Optional kann zwischen der Übertragung des Synchronisationsbereichs sowie dem Nachbarknot-enbereich und dem Datenbereich eine Pause liegen, um Sendekapazitäten wieder aufzuladen.

Sind sehr viele Beaconslots bereits belegt, so kann auch auf das Senden eines Synchronisationssignals verzichtet werden. Der jeweilige Knoten wird dann zu einem so genanten Endknoten. Dadurch können allerdings Knoten, die eine Schicht weiter entfernt liegen, unerreichbar werden.
Das Synchronisationssignal enthält:
- den Beaconslot, damit ein Empfänger aus der Empfangszeit den Frameanfang bestimmen kann. Ein Knoten kann dabei in größeren Zeitabständen seinen Beaconslot wechseln.
- den Hop Count Wert des sendenden Knotens, damit Nachbarn die optimale Route zum Zentralknoten findet.
- die Beaconslots der Nachbarn, um indirekte Beacon-Kollisionen (Hidden Terminal Problem) zu vermeiden. Die jeweiligen Beaconslotinformationen können effektiv als Bitmap übertragen werden.
- die Ankündigung eines bevorstehenden Beaconslot Wechsels.

Nach einer bestimmten Zeit sind alle Knoten auf einen gemeinsamen Frame Anfang synchronisiert. Nach einer Frame Periode wiederholt sich das Schema.

Dem Verfahren liegt die Regel zugrunde, nach der jeder Knoten selbst dafür verantwortlich ist, sich zu synchronisieren und den besten Pfad zur Basis zu finden. Die Synchronisierung und Routenoptimierung erfolgt dezentral in den Knoten. Dabei gelten folgende Regeln:

Ein unsynchronisierter Knoten ist zunächst im so genannten Sniff Modus, d.h. einem Modus indem er nicht sendet sondern versucht ein Synchronisationssignal mit einem Beacon zu empfangen, um sich zu synchronisieren. Dabei sind folgende systematische Verfahren denkbar:

In Figur 3 wird eine Verfahrensvariante des Sniff Modes dargestellt. Figur 3 veranschaulicht den Zeitrahmen eine Frames, der durch den Frameanfang und Frame Periode definiert wird. Im Frame wird ein Beacon in einem t= t_{sync} langen Beaconslot übermittelt, Die Empfangsbereitschaft des Knotens wird durch den, die Frame Periode überlappenden schwarzen Zeitbalken angedeutet. Der Knoten sucht dabei maximal für die Zeit von t_{sniff}, ₘₐₓ = t_{frme} + t_{sync}, also etwas mehr als eine Frame Periode, einen Beacon. Der schwarze Zeitbalken repräsentiert das Zeitintervall von t_{sniff}, ₘₐₓ.

In Figur 4 wird eine weitere Verfahrensvariante des Sniff Modus dargestellt. Figur 4 zeigt analog zur Figur 3 einen Frame sowie ein darin in einem Zeitintervall t_{sync} übertragenen Beacon. Die Empfangsbereitschaft des Knotens wird ebenfalls durch die schwarzen Zeitbalken repräsentiert. Wenn der Empfänger des nicht synchronisierten Knotens nur kurz aktiv sein kann, hört er in dieser.Variante periodisch die jeweils maximale mögliche Empfangsdauer ab und lädt anschließend seine Kapazitäten wieder auf. Die maximale Empfangsdauer ist mit t_{sniff} bezeichnet. Nach einer Frame Periode verschiebt er sein Empfangsfenster um die Differenz Δt aus Empfangsdauer (t_{sniff}) und der Synchronisationszeit (t_{sync}), Δt = t_{sniff} - t_{sync}. So kann nach mehreren Perioden ein beliebiger Beacon im Frame empfangen werden.

Sobald der Knoten einen Beacon empfängt, synchronisiert er bei allen Verfahren auf den Frameanfang. Wenn in einer Frame Periode mehrere Nachbarn kollisionsfrei ihr Beacon senden, verkürzt sich die Synchronisationszeit, weil die sich Empfangswahrscheinlichkeit um die Anzahl der Nachbarn vervielfacht.

Eine erfolglose Synchronisation erfordert viel Energie, weil der Empfänger mindestens eine ganze Frame Periode aktiv war ohne die Synchronisation erfolgreich abgeschlossen zu haben. Um den vorgegebenen geringen Duty Cycle von bspw. 0,02 % einzuhalten, darf nach einem Fehlschlag der nächste Versuch erst nach Tagen erfolgen. Nur so kann eine lange Lebensdauer der Batterie gewährleistet werden.

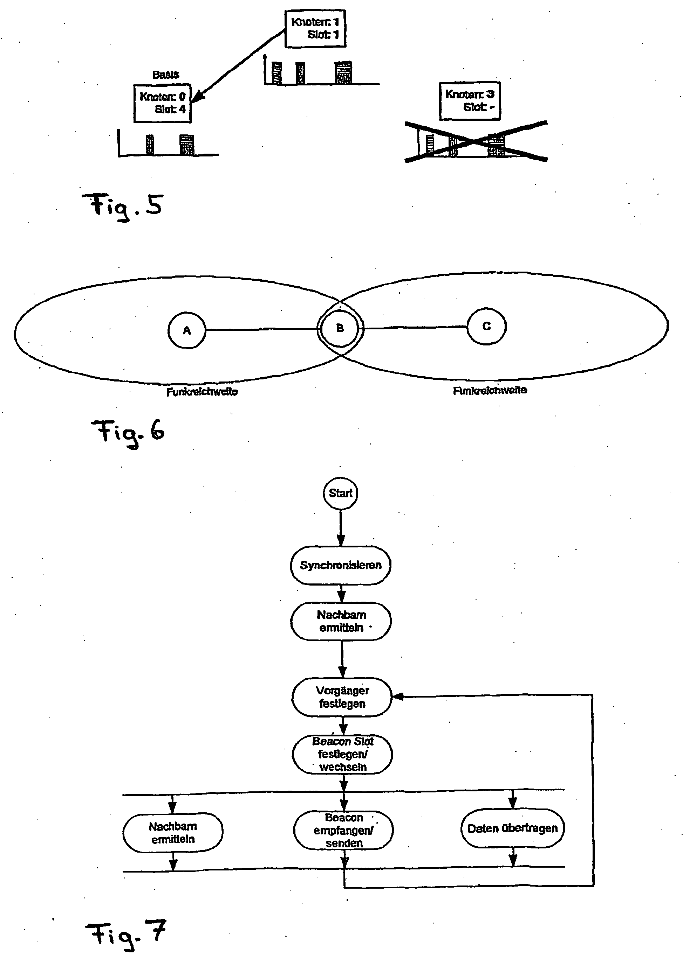

Figur 5 veranschaulicht, dass im vorliegenden Ausführungsbeispiel ein Knoten nur dann ein Synchronisationssignal aussendet, wenn er von seinem selektierten Vorgänger einen Beacon empfangen hat. Das sichert sowohl eine gemeinsame Zeitbasis für das gesamte Netzwerk als auch eine durchgängige Verbindung zum Zentralknoten. In Figur 5 hat der Knoten 1 von seinem selektierten Vorgänger, dem Knoten 0 einen Beacon empfangen. Somit sendet Knoten 1 seinerseits ein Synchronisationssignal aus. Knoten 3 hingegen ist noch nicht synchronisiert, d.h. er sendet kein eigenes Synchronisationssignal mit einem Beacon aus.

In einer vorteilhaften Ausgestaltung des Verfahrens wird in jeder Frame Periode der Beacon des selektierten Vorgängers empfangen.

Zur Vermeidung von Kollisionen werden bereits belegte Beaconslots vor direkten und indirekten Kollisionen geschützt. Daher stellt jeder Knoten vor der Belegung eines neuen Beaconslots sicher, dass dieser über die doppelte Funkreichweite frei ist. Für den vom jeweiligen Koten ausgewählten Beaconslot überprüft der Knoten folgende Gegebenheiten:
a) Kein Nachbar sendet auf diesem Beaconslot seinen Beacon. Dies erkennt der Knoten durch Abhören des Slots.
b) Kein Nachbar eines Nachbarn darf diesen Beaconslot verwenden. Das heißt, ein belegter Beaconslot ist bis zum übernächsten Nachbarn vor Doppelbelegung geschützt. Dadurch werden indirekte Kollisionen (Hidden Terminal Problem) vermieden. Jeder Knoten überträgt in seinem Beacon ein Feld, in dem die durch Nachbarn belegten Beaconslots markiert sind.
c) Optional: Aus den freien Beaconslots soll der Beaconslot zufällig gewählt werden. Durch die Verteilung entstehen beim Aufbau des Netzwerks weniger indirekte Kollisionen.

Dadurch wird sichergestellt, dass ein Beaconslot nach einem Abstand von drei Knoten (besser: nach drei Hops) wieder verwendet werden kann.
Zudem scannt jeder Knoten im Hintergrund alle Beaconslots bzw. die korrespondierenden Datensignale im Nachbarschaftsbereich, um neue Nachbarn zu ermitteln. So kann er seine Route zum Zentralknoten optimieren oder bei Ausfall des selektierten Vorgängers sofort einen anderen Nachbarn aus seiner Liste auswählen. Zur Optimierung der Kommunikationsstruktur wird von jedem Knoten der Vorgänger selektiert, der den niedrigsten Hop Count Wert, die wenigsten Nachfolger und die höchste, Empfangssignalstärke (Received Signal Strength Indication, RSSI-Wert) aufweist. Der Hop Count Wert hat dabei Vorrang vor der Nachfolgerzahl und diese hat Vorrang vor der Empfangssignalstärke. Wird ein besserer Nachbar gefunden, so wird dieser als Vorgänger selektiert und der eigene Hop Count Wert entsprechend angepasst.

In vorteilhafter Weise wechselt jeder Knoten zur Kollisionsvermeidung sporadisch seinen Beaconslot. Belegte Beaconslots werden so vor direkten oder indirekten Kollisionen (Hidden Node Problem) geschützt. Der Knoten kündigt den Wechsel im Beacon an. Die Nachfolger empfangen die Ankündigung und versuchen, den Beacon auf dem neuen Beaconslot zu empfangen. So bleiben die bestehenden Kommunikationswege erhalten. Andere Nachbarn bemerken nur, dass ein neuer Beaconslot verwendet wird. Taucht die Kennung des Knotens nicht in einem neuen Beaconslot auf, so ist der Knoten ausgefallen oder aus dem Netzwerk genommen.

Figur 6 veranschaulicht das Hidden Node Problem. Gezeigt sind die Knoten A, B und C sowie die Funkreichweite der Knoten A und C. Wenn der Knoten B sich in der Mitte von zwei Nachbarn A und C befindet und A und C im gleichen Beaconslot ihren Beacon senden, dann kollidieren die Beacons beim Knoten B, ohne dass dies die Knoten A oder C bemerken können. Im Extremfall ist der Knoten B weder von C noch von A erreichbar.

Durch den Wechsel des Beaconslots wird das Hidden Node Problem gelöst. Ein Knoten wird dabei vorzugsweise für mindestens zwei Synchronisationsphasen seinen Beaconslot beibehalten, da bei einem kürzeren Wechsel des Beaconslots keine systematische Synchronisation eines unsynchronisierten Knotens möglich ist. Die Auswahl des neuen Beaconslots erfolgt dabei nach den vorstehend beschriebenen Kriterien.

Mit dem bisher beschriebenen Verfahren entsteht iterativ ein Netzwerk, das sich bis zur optimalen Vernetzung stetig optimiert. Dabei werden folgende Ergebnisse erreicht:
- Auflösung von Hidden Terminal Kollisionen,
- Auffinden der kürzesten (geringster Hop Count) und besten (Vorgänger mit höchstem RSS1-Wert) Verbindung zum Zentralknoten, und
- Ermittlen aller Nachbarn in Sende-/Empfangsreichweite eines Knotens. Damit kann bei Ausfall eines Knoten sofort eine Alternativroute verwendet werden. Ein vollständiges Abbild aller Netzwerkverbindungen kann erstellt werden.

Nun soll detailliert auf den Aufbau sowie auf die Optimierung der Kommunikationsstruktur innerhalb des Netzwerkes eingegangen werden. Es werden dabei folgende Regeln unterstellt:
- jeder Knoten besitzt eine Kennung, die Knotennummer,
- alle Knoten synchronisieren sich in der Reihenfolge ihrer Knotennummern, und
- es wird immer der freie Beaconslot mit der niedrigsten Nummer zum Senden des Beacons ausgewählt.

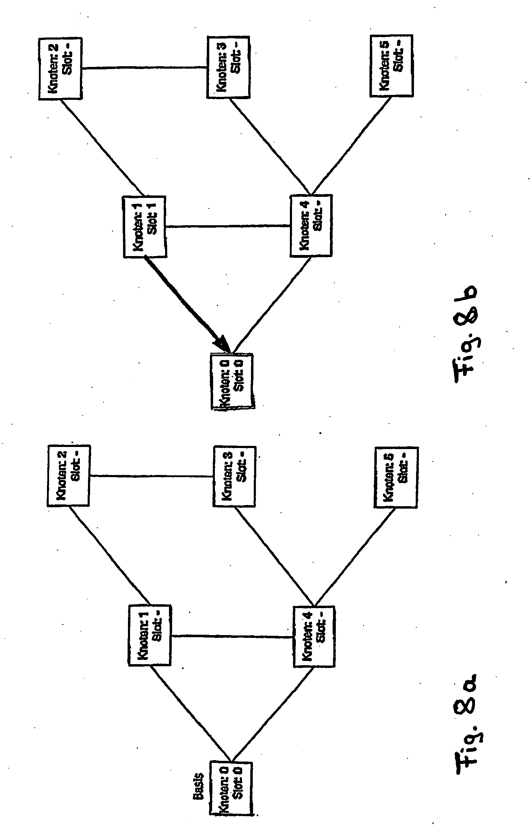

Die Figuren 8a - 8g zeigenden Aufbau der entsprechenden Kommunikationsstrukturen in einem Netzwerk das aus den fünf Knoten mit den zugehörigen Knotennummern 0 bis 5 besteht. Die Knoten sind als rechteckige Kästen dargestellt in denen die Knotennummer sowie der jeweils aktuelle Beaconslot angegeben sind. Die grundsätzlich möglichen Funkverbindungen sind als dünne Verbindungslinien dargestellt. Die tatsächlich gewählten Kommunikationsverbindungen sind mit dickeren Pfeilen gekennzeichnet. Der Zentralknoten hat die Knotennummer 0.

Figur 8a zeigt als dünne Verbindungslinien, die aufgrund der jeweils überlappenden Sende- und Empfangsbereiche der einzelnen Knoten grundsätzlich möglichen Kommunikationsverbindungen zwischen den einzelnen Knoten. Der Basisknoten sendet ein Synchronisations-signal mit einem Beacon im Beaconslot 0. Alle anderen Knoten sind unsynchronisiert und versuchen, einen Beacon im Sniff Mode zu empfangen.
Figur 8b zeit, dass der Knoten 1 den Beacon des Basisknoten empfangen und sich auf den Frame Anfang synchronisiert hat. Der von dem Knoten 1 selektierte Vorgänger ist der Zentralknoten. Der Hop Count Wert des Knotens 1 ist somit 1. Da der Beaconslot 0 bereits durch den Zentralknoten belegt ist, sendet Knoten 1 seinen Beacon in Beaconslot 1.

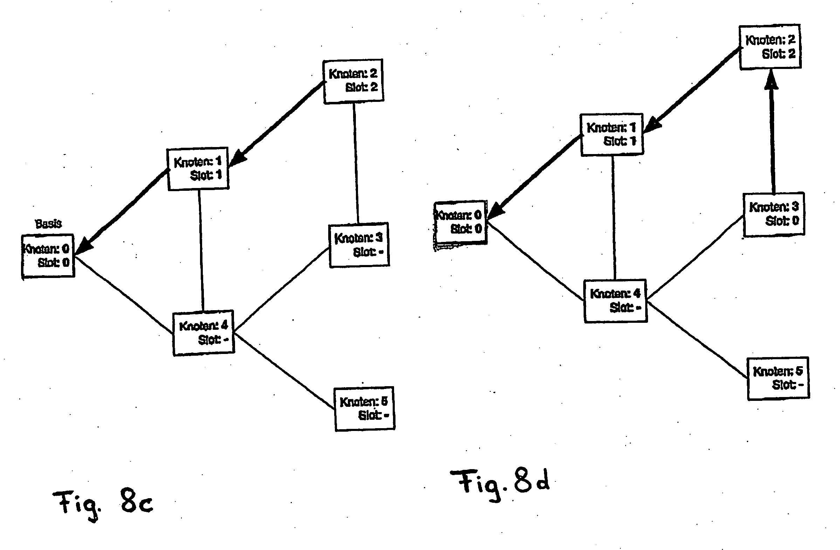

Figur 8c zeigt, dass sich der Knoten 2 auf das von Knoten 1 ausgesandte Synchronisationssignal synchronisiert und als Vorgänger den Knoten 1 selektiert hat. Er sendet seinen Beacon in Beaconslot 2, da Beaconslot 1 von Knoten 1 und Beaconslot 0 durch den Nachbarknoten von Knoten 1 belegt ist.
Figur 8d zeigt, dass sich Knoten 3 auf den Knoten 2 synchronisiert und für die Aussendung seines eigenen Beacon den Beaconslot 0 gewählt hat. Dies ist deshalb möglich, da der Beaconslot 0 weder von dem direkten Nachbarn (Knoten 2) noch dem übernächsten Nachbarn (Knoten 1) von Knoten 3 benützt wird. Somit ist sowohl aus Sicht von Knoten 0 als auch von Knoten 3 eine doppelte Verwendung des Beaconslots 0 bis zum übernächsten Nachbarn geschützt. Der optimale Wer über Knoten 4 kann von Knoten 3 noch nicht gefunden werden, da Knoten 4 noch nicht synchronisiert ist, daher keinen eigenen Beacon sendet und somit dem Knoten 3 noch nicht bekannt ist.

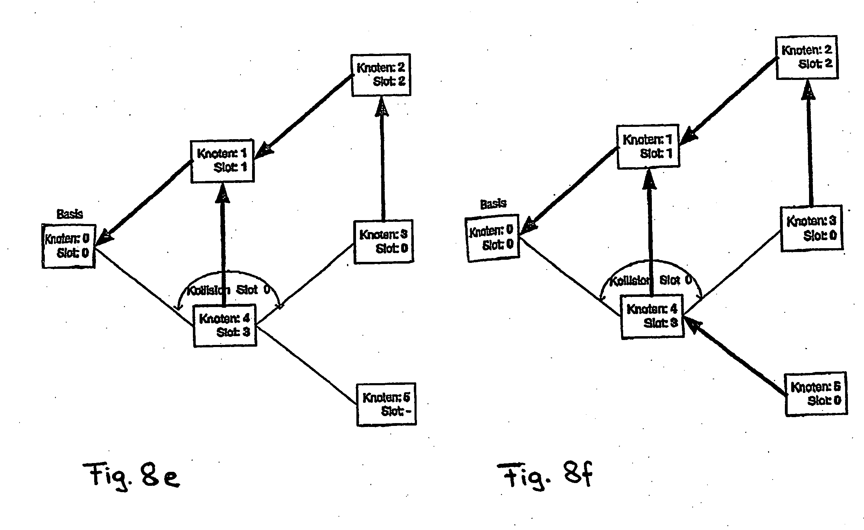

Figur 8e zeigt, dass der Knoten 4 jeweils von Knoten 0 sowie von Knoten 3 Synchronisationssignale mit dem Beaconslot 0 erhält. Dies erzeugt in Knoten 4 Kollisionen, so dass für den Knoten 4 weder Knoten 0 noch Knoten 3 sichtbar sind (Hidden Node Problem). Der einzige für den Knoten 4 sichtbare Knoten ist Knoten 1. Der Knoten 4 synchronisiert sich daher auf den Knoten 1 und sendet seinen Beacon demzufolge in Beaconslot 3, da der Knoten 4 dem Synchronisationssignal des Knotens 1 entnehmen kann, dass Knoten 1 den Beaconslot 1 belegt und die Nachbarn von Knoten 1 (Knoten 0 und Knoten 2) die Beaconsslots 0 und 2 belegen.

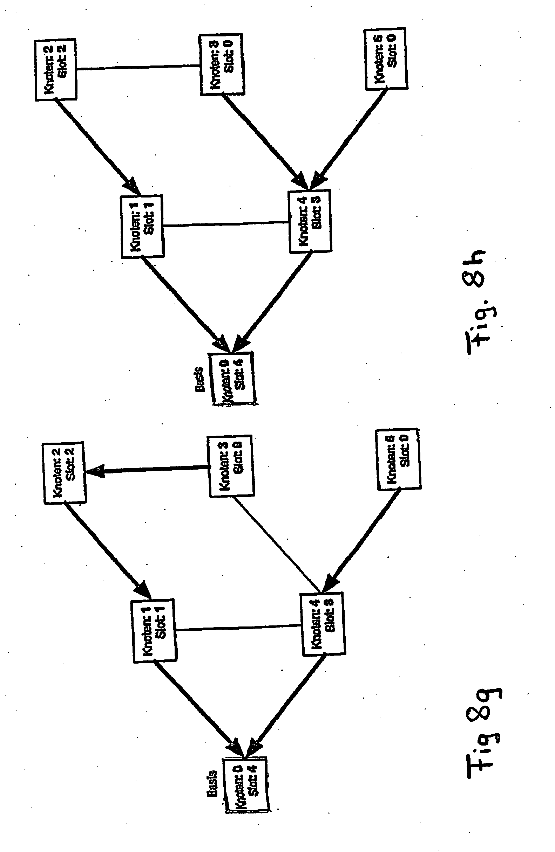

Figur 8f zeigt, dass sich der Knoten 5 auf den Knoten 4 synchronisiert und für seinen eigenen Beacon den Beaconslot 0 auswählt hat, da der einzige sichtbare Nachbar für Knoten 5 der Knoten 4 ist, und dieser dem Knoten 5 mitteilt, dass er selbst den Beaconslot 3 und sein Nachbar (Knoten 1) den Beaconslot 1 belegt. In diesem Stadium können nun alle Knoten erreicht werden, manche allerdings auf Umwegen. Eine weitere Optimierung der Kommunikationsstruktur bietet sich an, weil in Knoten 4 die Beacon von Knoten 0 und Knoten 3 im gemeinsamen Beaconslot 0 kollidieren. Durch solche "Hidden Node" Kollisionen können Knoten auch unerreichbar sein. Dieses Problem wird durch einen sporadischen Wechsel der Beaconslots gelöst. Dies wird in Figur 8g verdeutlicht.
Figur 8g zeigt, dass der Zentralknoten seinen Beaconslot von 0 auf 4 wechselt. Dies ist möglich, da seine Nachbarn (Knoten 1 und 4) sowie seine übernächsten Nachbarn (Knoten 2 und 5) die Beaconslots 0, 1, 2 und 3 belegen. Die Kollision hinsichtlich des Beaconslots 0 wirkte sich bisher nur auf Knoten 4 aus, so dass nach dem Wechsel der Zentralknoten nunmehr jederzeit den Beacon von Knoten 4 empfangen kann. Der Wechsel wurde im Synchronisationssignal des Zentralknotens angekündigt, so dass der Knoten 1 sowie der Knoten 4 sofort nach dem Wechsel den neuen Beaconslot 4 abhört. Damit erkennt der Knoten 4 den Zentralknoten. Da der Zentralknoten einen geringeren Hop Count Wert hat als der bisher selektierte Vorgänger (Knoten 1), wählt der Knoten 4 nunmehr den Zentralknoten zu seinem Vorgänger. Die Verbindung zu Knoten 1 wird damit zur Backup-Verbindung.
Figur 8h zeigt, dass Knoten 3 aufgrund des geringern Hop Count Wertes nunmehr den Knoten 4 als Vorgänger wählt. Die Verbindung zu Knoten 2 wird zur Backup-Verbindung für Knoten 3. Damit ist die optimale Vernetzung zum Zentralknoten gefunden. Anzumerken ist, dass im Downlink, d.h. die Kommunikation zum Zentralknoten hin, in Knoten 4 der Beacon von Knoten 3 und Knoten 5 kollidiert. Da der Uplink, d.h. die Kommunikation vom Zentralknoten zu den Knoten, kollisionsfrei ist, funktioniert die Synchronisation dennoch. Diese noch bestehende Kollision kann durch einen sporadischen Wechsel der durch die einzelnen Knoten belegten Beaconslots jedoch wie dargestellt behoben werden.

Bei dem beschriebenen Verfahren können unter anderem folgende Sonderfälle auftreten:
a) Alle Knoten des Netzwerkes sind bis auf den letzten Knoten B synchronisiert. Der Knoten B besitzt zwei Nachbarknoten A und C, die sich nicht gegenseitig erreichen können. Beide Nachbarknoten senden ihren Beacon im gleichen Beaconslot. Die Dämpfung der jeweiligen Synchronisationssignale zum letzten Knoten ist auf beiden Strecken ähnlich. Damit besteht das Problem, dass der Knoten B weder von A noch von C einen Beacon empfangen kann. Es ist höchstens eine Energiedetektion des Empfangssignals möglich. Er kennt somit den Frame Anfang nicht und kann sich nicht synchronisieren. Durch den sporadischen Wechsel der Beaconslot Belegung besteht auch in solchen Fällen eine hohe Wahrscheinlichkeit für die Beseitigung der Kollision.
b) Zwei Nachbarknoten A und B ermitteln einen freien Beaconslot und beginnen im gleichen Frame mit dem Senden ihres Beacons. Wenn beide Knoten den gleichen Beaconslot wählen, kollidieren die jeweiligen Beacons. Keiner der Knoten erkennt die Doppelbelegung. Die Wahrscheinlichkeit für dieses Szenario ist gering und kann wie folgt abgeschätzt werden: P ≈ <Duty Cycle> * <Anzahl Beaconslots>. Auch diese Kollision wird durch einen sporadischen Wechsel des Beaconslots durch die Knoten im Netz beseitigt.
Aus Sicht eines einzelnen am Netzwerk beteiligten Knotens lässt sich das Verfahren wie in Figur 7 gezeigt erläutern. Dabei wird ein noch nicht synchronisierter Knoten K1 unterstellt, der von zumindest teilweise synchronisierten Nachbarknoten umgeben ist.
1. Start
   Ein Nachbarknoten beginnt ein Synchronisationssignal zu senden.
2. Synchronisieren
   Zunächst versucht K1 ein Synchronisationssignal eines Nachbarn zu empfangen um sich auf den Beacon dieses Nachbarn zu synchronisieren.
3. Nachbarn ermitteln
   Hat K1 einen Beacon empfangen eines Nachbarn empfangen, so kennt er den Frame Anfang und somit auch die Lage des Nachbarknotenbereichs. Er hört alle Zeitschlitze im Nachbarknotenbereich ab. Dadurch entdeckt er: alle direkten Nachbarn, deren Entfernung zum Zentralknoten (Hop Count) und wie viele Nachfolger jeder Nachbar schon hat, sowie alle durch direkte und indirekte Nachbarn belegten Zeitschlitze.
4. Vorgänger festlegen
   Aus den Nachbarschaftsinformationen ermittelt K1 den Vorgänger nach bestimmten Kriterien (Hop Count; empfangene Signalstärke; Anzahl Nachfolger).
5. Beaconslot festlegen
   Aus den Nachbarschaftsinformationen ermittelt K1 die belegten Zeitschlitze und sucht sich gemäß vorstehend beschriebener Regeln einen freien Zeitschlitz zum Senden seines eigenen Beacons aus.
6. Normalbetrieb
   Im Normalbetrieb empfängt K1 den Beacon seines Vorgängers, um die Synchronisation aufrecht zu erhalten und verschickt den Beacon in seinem Zeitschlitz, um seine Nachfolger zu erreichen. Er kann im Datenbereich Datenpakete mit einem Nachbarknoten austauschen. Im Hintergrund ermittelt er ständig seine aktiven Nachbarn und erkennt so Veränderungen in der Netzstruktur.
7. Vorgänger wechseln
   Fällt der Vorgänger aus oder findet sich ein besserer Vorgänger, so wechselt K1 zu einem neuen Vorgänger.
8. Beaconslots wechseln
   Nach einer bestimmten Zeit wechselt K1 seinen Beaconslot. Dies teilt er rechtzeitig seinen Nachfolgern mit, damit diese seinen Beacon im neuen Beaconslot empfangen.
9. Der Ablauf wiederholt sich, der Normalbetrieb wird wieder aufgenommen.

Das zweite Ausführungsbeispiel beschreibt ebenfalls eine Anwendung des erfindungsgemäßen Verfahrens in einem Multi Hop Netzwerk mit einem Zentralknoten und mehreren Sensorknoten. Die Sensorknoten weisen zusätzlich zur bisher beschriebenen Hardwareinfrastruktur jeweils ein oder mehrere Sensoren auf, mit denen sie bspw. ihre Umwelt oder Manipulationen am Knoten selbst erfassen können. Das Netzwerk wird in diesem Ausführungsbeispiel zur Überwachung von Infrastrukturkomponenten in einem Gebäude mit mehreren Stockwerken eingesetzt. Auf den Stockwerken sind jeweils mehrere Einheiten, bspw. Wohnungen vorgesehen. Damit ergibt sich eine Zuordnung einzelner Sensorknoten zu Stockwerken und Wohnungen und somit eine vorgegebene Clusterung der Sensorknoten. Es gilt dabei die von den Sensorknoten erfassten Sensordaten im Netzwerk an den Zentralknoten zu übermitteln. In diesem Ausführungsbeispiel wird unterstellt, dass die Sensorknoten fest installiert sind und jeweils eine individuelle Kennung aufweisen. Die im Folgenden dargestellten Berechnungen gehen von einem über 12 Jahre gemittelten Duty Cycle von 0,03% aus. Als maximale kontinuierliche Sendezeit eines Sensorknotens werden 8 -10 ms, als maximale kontinuierliche Empfangszeit werden 10 - 20 ms unterstellt. Die Datenrate beträgt 100 kbaud.
Das Verfahren folgt folgenden Grundregeln:
- Zu Beginn des Verfahrens sind alle Sensorknoten im Sniff-Modus, nur der Zentralknoten sendet Synchronisierungssignale aus. Dabei sendet der Zentralknoten regelmäßig zu Beginn jedes Zyklus seinen Beacon im Beaconslot 1 aufs.
- Jeder Sensorknoten synchronisiert sich auf den Beacon, der den niedrigsten Hop-Count Wert und den höchsten RSSI-Wert besitzt.

Dabei synchronisiert sich ein Sensorknoten zunächst auf den ersten Beacon, den er im Sniff Mode empfängt und legt seinen Vorgänger fest. Damit ist der Sensorknoten zeitsynchron zum bereits aktiven Netzwerk und kann jetzt in jedem Zyklus gezielt einzelne Beaconslots mithören, um einen ggf. einen geeigneteren Vorgänger (Beacon) zu finden. Damit dies nicht zu lange dauert sucht ein zeitsynchroner Sensorknoten in jedem Zyklus mit ca. 60 ms dauernden Pausen eine größere Zahl an Beaconslots ab. Nach n Zyklen hat der Sensorknoten alle Beaconslots abgehört und ist auf den optimalen Beacon synchronisiert. Jeder Sensorknoten, der sich auf einen Beacon endgültig synchronisiert hat, sendet eine Sync_ind Message an den Zentralknoten zur Bestätigung. Theoretisch kann dies bereits erfolgen nachdem sich der Sensorknoten auf den ersten Beacon synchronisiert hat.

Jeder Sensorknoten wählt, wie vorstehend bereits beschrieben, seinen Vorgänger aus und ordnet sich selbst einen entsprechenden Hop Count Wert zu. Jedes von einem Sensorknoten ausgesendetes Synchronisationssignal enthält den Beacon, die Senderkennung sowie den entsprechenden Hop Count Wert.
Die Sync_ind Message enthält: ,
- die Kennung der Sensorknotens,
- den Hop Count Wert des Sensorknotens, und
- den RSSI-Wert des Beacons auf den sich der Sensorknoten synchronisiert hat.

Nach einer gewissen Anzahl von Zyklen hat der Zentralknoten alle Kennungen der synchronisierten Sensorknoten einer Schicht erhalt. Der Zentralknoten ernennt dann pro Schicht und Wohnungs-Cluster einen Sensorknoten zum Repeaterknoten und teilt jedem Repeaterknoten einen unterschiedlichen Beaconslot größer als 1 zu.

In einer alternativen Ausführungsform ernennt der Zentralknoten zunächst die Repeaterknoten, die aber erst nach einem späteren Broadcast-Befehl nahezu gleichzeitig mit dem Senden ihres Beacons beginnen.
Dadurch entstehen bspw. in einem zehngeschossigen Haus mit je zehn Wohnungen pro Etage 100 Repeaterknoten. Eventuell können es einige wenige mehr werden, wenn eine Wohnung nur teilweise von einem Beacon der unteren Schicht erfasst wird. Es ist in diesem Fall vorteilhaft in dem Wohnungsteil, der dann zur nächst höheren Schicht gehört, noch ein zusätzlicher Repeaterknoten vorzusehen.

Die Entscheidung welcher Sensorknoten pro Cluster (Wohnung) zum Repeaterknoten ernannt wird und in welchem Beaconslot er sendet, kann nach folgenden Parametern erfolgen:
- RSSI-Wert (z.B. mittlerer Wert)
- Stockwerk (Beaconslotzuleilung, um Kollisionen z.B. im »Hidden Terminal« Fall zu vermelden).

Jeder Repeaterknoten sendet in dem ihm zugeteilten Beaconslot regelmäßig seinen Beacon. Die restlichen Sensorknoten, die nicht zu einem Repeaterknoten ernannt wurden, kommunizieren über einen Beacon-Knoten der nächsttieferen Sphäre mit dem Zentralknoten.

Als vorteilhafte Alternative synchronisieren sich die restlichen Sensorknoten eines Wohnungsclusters, d.h. alle Sensorknoten einer Wohnung, die nicht zu Repeaterknoten wurden, auf den Repeaterknoten mit ihrer Wohnungs-Kennung. Das hat auch energetische Vorteile, da innerhalb einer Wohnung der Kommunikationslink besser ist als über eine Stockwerk hinweg. Die Datenübertragung der Sensorknoten erfolgt dabei über ihren jeweiligen Repeater und den bei der Synchronisation festgelegten Weg der Repeaterknoten in den einzelnen Schichten.

Durch die schrittweise Synchronisation ergeben sich automatisch Repeaterpfade in die oberen Stockwerke. Allein durch diese Repeaterpfade lässt sich eine Kommandoübertragung in die oberen Stockwerke relativ schnell realisieren. Die Kommandos lassen sich dabei auf verschiedene Arten übertragen:
- Befehl wird im Beacon, d.h. im Beaconslot übertragen;
- Nach dem Beacon Frame schließt sich noch ein Kommando-Frame an; oder
- Als ganz normales Datenpaket.

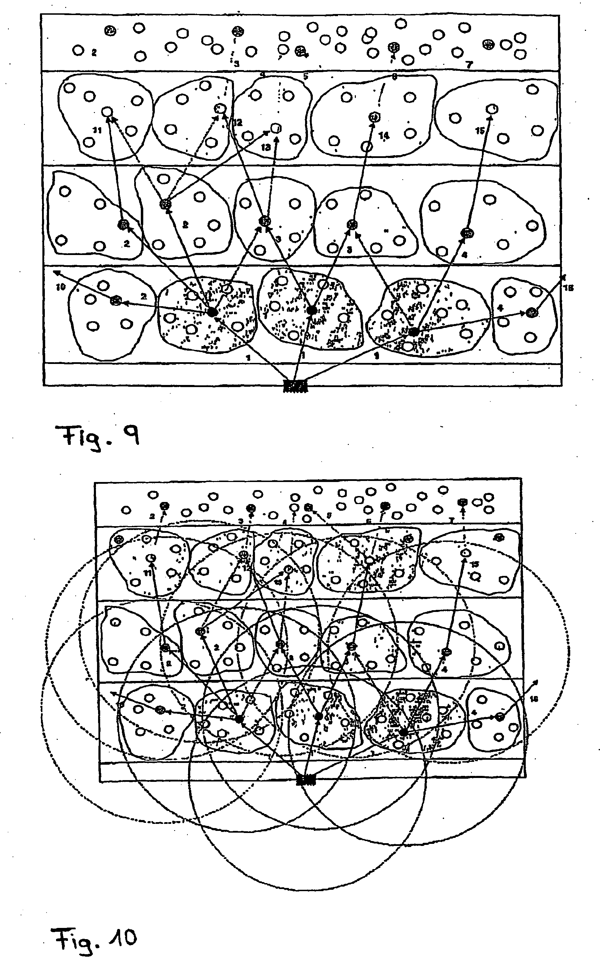

Figur 9 zweigt schematisch die Verteilung von Sensorknoten in einem Gebäude mit 4 Stockwerken. Die einzelnen Sensorknoten (weiße Kreise) sind dabei auf den Stockwerken einzelnen Wohnungsclustern zugeordnet. In jedem Wohnungscluster wurde ein Sensorknoten als Repeaterknoten ausgewählt. Zwischen den Repeaterknoten besteht eine Kommunikationsstruktur (schwarze Pfeile), die die Kommunikation der Repeaterknoten mit dem Zentralknoten im Erdgeschoss des Gebäudes ermöglicht. Die einzelnen Sensorknoten wählen für ihre Kommunikation mit dem Zentralknoten bspw. als Vorgänger stets den Repeaterknoten in ihrem jeweiligen Wohnungscluster.

Figur 10 unterscheidet sich von Bild dadurch, dass die Sende- und Empfangsbereiche einzelner Repeaterknoten durch Kreise veranschaulicht sind.

Jeder Sensorknoten im Sendebereich des Zentralknotens empfängt den Beacon des Zentralknotens(Hop-Count 0), synchronisiert sich auf diesen und antwortet dem Master mit einer Sync_ind Message in einem Datenslot. Der Beacon kann max. 8 - 10 ms lang sein. Bei einer Datenrate von 100 kbaud und einer Manchester Codierung entspricht dies ca. 50 - 62 Bytes, die für einen Beacon zur Verfügung stehen. Theoretisch könnte man auch darauf verzichten nach einigen Hops bzw. Schichten die Beaconslots wieder von vorn zu belegen, sondern man könnte für jeden Repeaterknoten einen eigenen Beaconslot bereithalten. Im vorliegenden Beispielsfall würde es ja nach Repeaterzahl von 100-200 einen 1-2 Sekunden langen Beaconframe geben. Diese Methode wäre insbesondere Im folgenden Alternativfall nützlich.

Eine Alternative wäre es, wenn jeder einzelne Beaconslot ca. 60-70 ms lang wäre und man die Beaconslots aufsteigend vergibt. D.h. Jeder Vorgänger Repeaterknoten sendet in einem niedrigeren Beaconslot. Dann kann jeder Repeaterknoten in einem Beaconslot den Beacon seines Vorgänger-Repeaterknotens empfangen und in einem der nächsten Beaconslots seinen eigenen Beacon senden. Damit lassen sich Befehle sehr schnell nach oben übertragen. Man hätte allerdings je nach Repeaterzahl und exakter Slotlänge einen sehr langen Beacon Frame von ca. 6-14 Sekunden Länge.

Die langen Beaconslotzeiten sind in diesem Fall dadurch bedingt, dass es theoretisch möglich ist, dass ein Beacon in einem Slot empfangen wird und direkt im nächsten Slot weitergesendet wird. Nach dem Empfang des Beacons ist aber eine ca. 50-60 ms lange Ladedauer des Elkos nötig. Kann man gewährleisten, dass bei der Slot Abfolge immer mindesten 5 Slots dazwischenliegen, so kann man auch mit 10 ms langen Slots arbeiten.

Die Datenübertragung im Netzwerk basiert vorzugsweise auf einem Contention basierten Verfahren.
Zusammenfassend wird mit dem zweiten Ausführungsbeispiel die stufenweise Synchronisation eines bidirektionalen drahtlosen Auslesenetzwerkes beschrieben, das anschließend synchron gehalten wird. Durch eine spezielle Syntax erhält jeder Sensorknoten bei der Montage in einer Wohnung eine eindeutige Kennung in der die Nummer der Wohnung sowie das entsprechende Stockwerk enthalten sind. Dadurch ist eine logische Clusterung nach Wohnungen möglich. Durch die Benennung von Beacon-Repeaternknoten innerhalb eines logischen Cluster (Wohnung) ergibt sich automatisch eine hierarchische Gliederung des Systems und die Routingpfade für die Kommunikation werden festgelegt. Zudem ist es denkbar die Beacon-Repeaterknoten in einem übergeordneten Netzwerk zu organisieren. Zur Optimierung des Stromverbrauches soll die Repeateraufgabe periodisch an Nachbarknoten übergeben werden.

## Patentansprüche

1. Verfahren zur Synchronisation und Kommunikation in einem Multihop Netzwerk mit mehreren Knoten, KN, und einem Zentralknoten, ZKN, die jeweils zumindest eine Sende-/Empfängereinheit, eine Speichereinheit sowie eine Prozessoreinheit aufweisen, wobei die Kommunikation zwischen den Sende-/Empfängereinheiten auf einer drahtlosen Datenübertragung in Frames beruht, die in definierte Slots unterteilt sind, die KNs und der ZKN räumlich so zueinander positioniert sind, dass sich im Sende-/Empfangsbereich jedes KNs mindestens ein weiterer KN als dessen Nachbar, und/oder der ZKN befindet, die Kommunikation zwischen einem KN und dem ZKN, sofern sich der KN außerhalb des Sende-/Empfangsbereich des ZKNs befindet, unter Einbeziehung weiterer KNs, als Zwischenknoten, über eine Multi-Hop Kommunikation erfolgt, und jedem KN zumindest ein Hop Count Wert zugeordnet wird, der die um Eins erhöhte Anzahl der Zwischenknoten für den jeweiligen KN angibt, über die die Kommunikation mit dem ZKN erfolgt, wobei der dem jeweiligen KN im Netzwerk bei der Kommunikation mit dem ZKN nächst liegende Zwischenknoten als Vorgänger des KN, der KN als Nachfolger des Zwischenknotens und alle KNs mit gleichen Hop Count Werten als Schicht bezeichnet werden, mit folgenden Verfahrensschritten:
a) Aussenden eines Synchronisationssignals durch den ZKN oder einen bereits synchronisierten KN, wobei ein durch den das Synclironisationssignal sendenden Knoten festgelegter Slot im Frame des Synchronisationssignals, der so genannte Beaconslot, mit einem die Synchronisation ermöglichenden Datenpaket, dem so genannten Beacon, belegt wird und zumindest der Hop Count Wert des sendenden Knotens im Frame des Synchronisationssignals übertragen wird, und für alle bereits synchronisierten Nachbarknoten des sendenden Knotens, die dem sendenden Knoten bekannt sind, Übertragen der jeweiligen durch die Nachbarknoten belegten Beaconslots und der Hop Count Werte der Nachbarknoten im Frame des Synchronisierungssignals oder als separates Datensignal durch den sendenden Knoten,
b) Empfangen des Synchronisationssignals sowie der in Zusammenhang damit übermittelten Daten durch einen im Sende-/Empfangsbereich des sendenden Knotens liegenden ersten KN,
c) Synchronisieren des ersten KN auf das Synchronisierungssignal,
d) Ermitteln der Nachbarn des ersten KN sowie deren jeweiliger Beaconslotbelegung und Hop Count Werte durch den ersten KN,
e) Festlegen des Vorgängers des ersten KNs im Netzwerk durch den ersten KN auf Basis vorgegebenen Kriterien,
f) Speichern der mit dem Synchronisationssignal sowie in Zusammenhang damit empfangenen sowie daraus ermittelten Daten durch den ersten KN,
g) Wiederholen der Schritte a) bis f) zumindest bis zur Synchronisation aller KN.

2. Verfahren nach Anspruch 1,
**dadurch gekennzeichnet, dass** das Aussenden des Synchronisationssignals durch den ZKN regelmäßig wiederkehrend erfolgt.

3. Verfahren nach Anspruch 1 oder 2,
**dadurch gekennzeichnet, dass** die Schritte a) bis f) auch nach erfolgter Synchronisierung aller KNs wiederkehrend ausgeführt werden.

4. Verfahren nach einem der Ansprüche 1 bis 3,
**dadurch gekennzeichnet, dass** mit dem Synchronisationssignal oder mit einem damit in Zusammenhang stehenden separaten Datensignal zusätzlich für alle synchronisierten Nachbarn des das Synchronisationssignal aussendenden KNs oder ZKNs, die jeweils von diesen bereits belegten Beaconslots und Hop Count Werte übertragen werden.

5. Verfahren nach einem der Ansprüche 1 bis 4,
**dadurch gekennzeichnet, dass** das Festlegen des Vorgängers des ersten KN darauf beruht, den Nachbarn mit dem geringsten Hop Count Wert auszuwählen.

6. Verfahren nach einem der Ansprüche 1 bis 5,
**dadurch gekennzeichnet, dass** das Festlegen des Vorgängers des ersten KN darauf beruht, den Nachbarn mit den wenigsten Nachfolgern auszuwählen.

7. Verfahren nach einem der Ansprüche 1 bis 6,
**dadurch gekennzeichnet, dass** für das Festlegen des Vorgängers des ersten KN Daten der übernächsten Nachbarn des ersten KNs herangezogen werden.

8. Verfahren nach einem der Ansprüche 1 bis 7,
**dadurch gekennzeichnet, dass** das Festlegen des Vorgängers des ersten KN darauf beruht, den Nachbarn auszuwählen, dessen Synchronisationssignal mit der größten Signalstärke vom ersten KN empfangen wurde.

9. Verfahren nach einem der Ansprüche 5 bis 8,
**dadurch gekennzeichnet, dass** bei der Festlegung des Vorgängers eine Kombination einzelner oder aller Kriterien gemäß den Ansprüchen 5 bis 8 berücksichtigt werden.

10. Verfahren nach einem der Ansprüche 1 bis 9,
**dadurch gekennzeichnet, dass** beim Aussenden des Synchronisationssignals der sendende Knoten seinen Beaconslot im Frames derart auswählt, dass ein bis zu den übernächsten Nachbarn des sendenden Knotens unbelegter Beaconslot gewählt wird.

11. Verfahren nach einem der Ansprüche 1 bis 10,
**dadurch gekennzeichnet, dass** ein KN der keinen freien Beaconslot findet zu einem Endknoten wird, der kein Synchronisationssignal aussendet.

12. Verfahren nach einem der Ansprüche 1 bis 11,
**dadurch gekennzeichnet, dass** für jede Schicht eine Anzahl von Beaconslots im Frame des Synchronisationssignals reserviert werden.

13. Verfahren nach einem der Ansprüche 1 bis 12,
**dadurch gekennzeichnet, dass** mindestens so viele Beaconslots im Frame des Synchronisationssignals wie Überlappungen von Sende-/Empfangsbereichen einzelner Sende-/Empfängereinheiten vorgesehen sind.

14. Verfahren nach einem der Ansprüche 1 bis 13,
**dadurch gekennzeichnet, dass** ein KN nur nach Empfang eines Synchronisierungssignals von seinem Vorgänger ein eigenes Synchronisierungssignal aussendet.

15. Verfahren nach einem der Ansprüche 1 bis 14,
**dadurch gekennzeichnet, dass** jeder ein Synchronisierungssignal aussendende KN seinen einmal gewählten Beaconslot zumindest für eine begrenzte Zeit bei jeder weiteren Aussendung eines Synchronisierungssignals benutzt.

16. Verfahren nach einem der Ansprüche 1 bis 15,
**dadurch gekennzeichnet, dass** der ZKN oder ein KN ein Synchronisierungssignal aussendet, das in Bezug zu vorher vom ZKN oder vom jeweiligen KN gesendeten Synchronisierungssignalen einen geänderten Beaconslot im Frame aufweist.

17. Verfahren nach einem der Ansprüche 1 bis 16,
**dadurch gekennzeichnet, dass** vor Aussenden eines Synchronisationssignals durch einen KN, der KN einen Beaconslot wählt, der sich von den Beaconslots, die seine Nachbarn benutzen, unterscheidet.

18. Verfahren nach einem der Ansprüche 1 bis 16,
**dadurch gekennzeichnet, dass** vor Aussenden des Synchronisationssignals durch einen KN, der KN einen Beaconslot wählt, der sich von den Beaconslots, die seine Nachbarn und seine übernächsten Nachbarn benutzen, unterscheidet.

19. Verfahren nach Anspruch 16,
**dadurch gekennzeichnet, dass** eine für einen KN anstehende Änderung seines bisher verwendeten Beaconslots durch den KN vor deren Ausführung durch den KN als Dateninformation an die jeweiligen Nachbarn gesendet wird.

20. Verfahren nach einem der Ansprüche 1 bis 19,
**dadurch gekennzeichnet, dass** jeder KN insbesondere die Synchronisierungssignale sowie die damit in Zusammenhang stehenden Daten seines ausgewählten Vorgängers auswertet und mit den gespeicherten Daten des vorhergehend empfangenen Synchronisierungssignals vergleicht und bei Abweichungen eine erneute Festlegung des Vorgängers nach Verfahrensschritt e) gemäß Anspruch 1 erfolgt.

21. Verfahren nach einem der Ansprüche 1 bis 20,
**dadurch gekennzeichnet, dass** zur Datenübertragung TDMA-(Time Division Multiple Access), FDMA- (Frequency Division Multiple Access), oder CDMA-Protokolle (Code Division Multiple Access) eingesetzt werden.

22. Verfahren nach einem der Ansprüche 1 bis 21,
**dadurch gekennzeichnet, dass** jeder Knoten sowie der Zentralknoten über eine eigne Kennung verfügen, die mit dem Synchronisierungssignal jeweils übermittelt wird.

23. Verfahren nach Anspruch 22,
**dadurch gekennzeichnet, dass** ein Knoten nach seiner Synchronisierung eine Syncsignal an den Zentralknoten sendet, das zumindest seine Kennung umfasst.

24. Verfahren nach einem der Ansprüche 1 bis 23,
**dadurch gekennzeichnet, dass** die Frames eine Framestruktur aufweisen, die zumindest einen Synchronisationsbereich, in dem Beaconslots übertragen werden, und zumindest einen Datenbereich, in dem Daten übertragen werden, aufweist

25. Verfahren nach Anspruche 24,
**dadurch gekennzeichnet, dass** im Synchronisationsbereich und im Datenbereich für jeden Knoten jeweils ein individueller Slot vorgesehen wird, der durch seinen Hop Count Wert und seinen gewählten Beaconslot festgelegt wird.

## Claims

1. A method for synchronization and communication in a multi-hop network having a multiplicity of nodes and a central node, each of which having at least one transmitting/receiving unit, a storage unit and a processor unit, with communication between the transmitting/receiving units being based on wireless data transmission in frames, which are subdivided into defined slots, the nodes and the central node being spatially positioned in relation to each other in such a manner that at least one further node is located in the transmitting/receiving range of each node as its neighbor, and/or the central node's neighbor, communication between a node and the central node, if the node is located outside the central node's transmitting/receiving range, occurring utilizing further nodes as intermediate nodes via a multi-hop communication, and each node being assigned a hop count value giving the number of intermediate nodes raised by one for the respective node via which communication with the central node occurs, with the nearest intermediate node of the respective node in the network during communication with the central node being referred to as the node's predecessor, the node as successor of the intermediate node and all the nodes with the same hop count values being referred to as layer, comprising the following process steps:
a) Transmission of a synchronization signal by the central node or a previously synchronized node, with the slot in the frame of the synchronization signal, the so-called beacon slot, determined by the node transmitting the synchronization signal being assigned a data package enabling synchronization, the so-called beacon, and at least the hop count value of the transmitting node being transmitted in the frame of the synchronization signal, and, for all the previously synchronized neighbor nodes of the transmitting node known to the transmitting node, transmission of the respective beacon slots assigned to the neighbor nodes and the hop count values of the neighbor nodes in the frame of the synchronization signal or as a separate data signal by the transmitting node,
b) Reception of the synchronization signal and the data transmitted in connection therewith by a first node lying in the transmitting/receiving range of the transmitting node,
c) Synchronization of the first node to the synchronization signal,
d) Detection by the first node of its neighbors and their respective beacon slot assignment and hop count values,
e) Determination of the predecessor of the first node in the network by the first node on the basis of given criteria,
f) Storage by the first node of the data received with the synchronization signal as well as data received in connection therewith and determined therefrom,
g) Repetition of steps a) to f) at least until synchronization of all the nodes.

2. A method according to claim 1,
**characterized in that** transmission of the synchronization signal by the central node occurs recurrently.

3. A method according to claim 1 or 2,
**characterized in that** the steps a) to f) are executed recurrently even after complete synchronization of all the nodes.

4. A method according to one of the claims 1 to 3,
**characterized in that** with the synchronization signal or with a separate data signal connected therewith, in addition, for all the synchronized neighbors of the nodes or the central nodes, the beacon slots assigned to them and the hop count values are transmitted.

5. A method according to one of the claims 1 to 4,
**characterized in that** determination of the predecessor of the first node is based on selecting the neighbor with the lowest hop count value.

6. A method according to one of the claims 1 to 5,
**characterized in that** determination of the predecessor of the first node is based on selecting the neighbor with the least successors.

7. A method according to one of the claims 1 to 6,
**characterized in that** data of the second neighbor of the first node is utilized for determination of the predecessor of the first node.

8. A method according to one of the claims 1 to 7,
**characterized in that** determination of the predecessor of the first node is based on selecting the neighbor whose synchronization signal is received by the first node with the greatest signal strength.

9. A method according to one of the claims 5 to 8,
**characterized in that** in determination of the predecessor, a combination of single criteria or all criteria according to claims 5 to 8 are taken into consideration.

10. A method according to one of the claims 1 to 9,
**characterized in that** in transmitting the synchronization signal the transmitting node selects its beacon slot in the frame in such a manner that a beacon slot is selected which is unassigned up to the second neighbor.

11. A method according to one of the claims 1 to 10,
**characterized in that** a node which cannot find a free beacon slot becomes an end node which does not transmit a synchronization signal.

12. A method according to one of the claims 1 to 11,
**characterized in that** for each layer, a number of beacon slots is reserved in the frame of the synchronization signal.

13. A method according to one of the claims 1 to 12,
**characterized in that that** at least as many beacon slots are provided in the frame of the synchronization signal as there is overlapping of transmitting/receiving ranges of the individual transmitting/receiving units.

14. A method according to one of the claims 1 to 13,
**characterized in that** a node only transmits an own synchronization signal after having received a synchronization signal from its predecessor.

15. A method according to one of the claims 1 to 14,
**characterized in that** each node transmitting a synchronization signal uses its selected beacon slot at least for a limited period in each further transmission of a synchronization signal.

16. A method according to one of the claims 1 to 15,
**characterized in that** the central node or a node transmits a synchronization signal which has a changed beacon slot in the frame with regard to the synchronization signal previously transmitted by the central node or by the respective node.

17. A method according to one of the claims 1 to 16,
**characterized in that** before transmission of a synchronization signal by a node, the node selects a beacon slot which differs from the beacons slots used by its neighbors.

18. A method according to one of the claims 1 to 16,
**characterized in that** before transmission of the synchronization signal by a node, the node selects a beacon slot which differs from the beacons slots used by its neighbors or its second neighbors.

19. A method according to claim 16,
**characterized in that** an imminent change of its hitherto used beacon slot by the node is transmitted by the node as data information to the respective neighbors before the node executes the change.

20. A method according to one of the claims 1 to 19,
**characterized in that** each KN evaluates in particular its selected predecessor's synchronization signals and data connected therewith and compares them with the stored data of the preceding received synchronization signal and if there are deviations, renewed determination of the predecessor according to the process step e) according to claim 1 occurs.

21. A method according to one of the claims 1 to 20,
**characterized in that** TDMA (time division multiple access), FDMA (frequency division multiple access), or CDMA (code division multiple access) protocols are used.

22. A method according to one of the claims 1 to 21,
**characterized in that** each node and the central node possess an own identification which is always transmitted with the synchronization signal.

23. A method according to claim 22,
**characterized in that** after its synchronization, a node transmits to the central node a sync-signal which includes at least its identification.

24. A method according to one of the claims 1 to 23,
**characterized in that** the frames have a frame structure which has at least one synchronization area in which beacon slots are transmitted, and at least one data area in which data are transmitted.

25. A method according to claim 24,
**characterized in that** for each node, an individual slot, which is determined by its hop count value and its selected beacon slot, is provided in the synchronization area and in the data area.

## Revendications

1. Procédé de synchronisation et de communication dans un réseau multi-sauts, avec plusieurs noeuds KN, et un noeud central ZKN, qui comportent chacun au moins une unité émettrice/réceptrice, une unité de mémoire, ainsi qu'une unité de processeur, la communication entre les unités émettrices/réceptrices reposant sur une transmission de données sans fil dans des trames, qui sont divisées en des intervalles définis, les KN et le ZKN étant physiquement positionnés l'un par rapport à l'autre de sorte que dans la zone émettrice/réceptrice de chaque KN se trouve au moins un autre KN en tant que voisin de ce dernier et/ou le ZKN, dans la mesure où le KN se situe à l'extérieur de la zone émettrice/réceptrice du ZKN, la communication entre un KN et le ZKN s'effectuant en impliquant d'autres KN, en tant que noeuds intermédiaires, via une communication multi-sauts, et à chaque KN étant affectée au moins une valeur de compteur de sauts, qui indique le nombre de noeuds intermédiaires augmenté de un pour le KN respectif, par l'intermédiaire desquels la communication avec le SKN s'effectue, le noeud intermédiaire suivant le KN dans le réseau lors de la communication étant désigné comme prédécesseur du KN, le KN étant désigné comme successeur du noeud intermédiaire et tous les KN de mêmes valeurs de compteur de sauts étant désignés comme couche avec les étapes de procédé suivantes :
a) Emission d'un signal de synchronisation par le ZKN ou par un KN d'ores et déjà synchronisé, un intervalle fixé par le noeud émettant le signal de synchronisation étant occupé dans la trame du signal de synchronisation, le dénommé intervalle balise par un paquet de données permettant la synchronisation, la dénommée balise et au moins la valeur de compteur de sauts du noeud émetteur étant transmise dans la trame du signal de synchronisation et pour tous les noeuds voisins du noeud émetteur qui sont d'ores et déjà synchronisés, qui sont connus par le noeud émetteur, transmission des intervalles balises respectifs occupés par les noeuds voisins et des valeurs de compteur de sauts du noeud voisin dans la trame du signal de synchronisation ou en tant que signal de données séparé par le noeud émetteur,
b) Réception du signal de synchronisation, ainsi que des données transmises en association avec celui-ci par un premier KN situé dans la zone émettrice/réceptrice du noeud émetteur,
c) Synchronisation du premier KN sur le signal de synchronisation,
d) Détermination des voisins du premier KN, ainsi que de leur occupation respective par l'intervalle balise et de valeurs du compteur de sauts par le premier KN,
e) Fixation du prédécesseur du premier KN dans le réseau par le premier KN, sur la base de critères prédéfinis,
f) Mise en mémoire des données réceptionnées avec le signal de synchronisation et en association avec ce dernier, ainsi que de données déterminées à partir de celui-ci par le premier KN,
g) Répétition des étapes a) à f), au moins jusqu'à la synchronisation de tous les KN.

2. Procédé selon la revendication 1,
**caractérisé en ce que** la délivrance du signal de synchronisation par le ZKN s'effectue de façon régulièrement récurrente.

3. Procédé selon la revendication 1 ou 2,
**caractérisé en ce que** les étapes a) à f) sont également réalisées de façon récurrente, même après achèvement de la synchronisation de tous les KN.

4. Procédé selon l'une quelconque des revendications 1 à 3, **caractérisé en ce qu'**avec le signal de synchronisation ou avec un signal de données séparé qui est en association avec ce dernier, les intervalles balises d'ores et déjà occupés par ces derniers et des valeurs de compteur de sauts sont transmis en supplément pour tous les voisins synchronisés du KN ou ZKN délivrant le signal de synchronisation.

5. Procédé selon l'une quelconque des revendications 1 à 4, **caractérisé en ce que** la détermination du prédécesseur du premier KN repose sur la sélection du voisin avec la plus faible valeur de compteur de sauts.

6. Procédé selon l'une quelconque des revendications 1 à 5, **caractérisé en ce que** la détermination du prédécesseur du premier KN repose sur la sélection du voisin avec le moins de successeurs.

7. Procédé selon l'une quelconque des revendications 1 à 6, **caractérisé en ce que** pour la détermination du prédécesseur du premier KN, des données des deuxièmes prochains voisins du premier KN sont impliquées.

8. Procédé selon l'une quelconque des revendications 1 à 7, **caractérisé en ce que** la détermination du prédécesseur du premier KN repose sur la sélection du voisin dont le signal de synchronisation avec la plus grande intensité de signal a été réceptionné par le premier KN.

9. Procédé selon l'une quelconque des revendication 5 à 8, **caractérisé en ce que** lors de la détermination du prédécesseur, une association de critères individuels ou de tous les critères selon les revendications 5 à 8 est prise en considération.

10. Procédé selon l'une quelconque des revendications 1 à 9, **caractérisé en ce qu'**à la délivrance du signal de synchronisation, le noeud émetteur sélectionne son intervalle balise dans la trame, de sorte que soit sélectionné un intervalle balise inoccupé jusqu'au deuxième prochain voisin du noeud émetteur.

11. Procédé selon l'une quelconque des revendications 1 à 10, **caractérisé en ce qu'**un KN qui ne trouve aucun intervalle balise libre devient un noeud final qui ne délivre aucun signal de synchronisation.

12. Procédé selon l'une quelconque des revendications 1 à 11, **caractérisé en ce que** pour chaque couche, il est réservé un nombre d'intervalles balises dans la trame du signal de synchronisation.

13. Procédé selon l'une quelconque des revendications 1 à 12, **caractérisé en ce qu'**il est prévu dans la trame du signal de synchronisation un nombre d'intervalles balises au moins égal au nombre de chevauchement de zones émettrices/réceptrices d'unités émettrices/réceptrices individuelles.

14. Procédé selon l'une quelconque des revendications 1 à 13,
**caractérisé en ce qu'**un KN ne délivre son propre signal de synchronisation qu'après réception du signal de synchronisation de son prédécesseur.

15. Procédé selon l'une quelconque des revendications 1 à 14, **caractérisé en ce que** chaque KN délivrant un signal de synchronisation utilise son intervalle balise sélectionné une fois au moins sur un temps limité, à chaque délivrance ultérieure d'un signal de synchronisation.

16. Procédé selon l'une quelconque des revendications 1 à 15, **caractérisé en ce que** le ZKN ou un KN délivre un signal de synchronisation, qui par rapport à des signaux de synchronisation émis précédemment par le ZKN ou par le KN respectif comporte un intervalle balise modifié dans la trame.

17. Procédé selon l'une quelconque des revendications 1 à 16, **caractérisé en ce qu'**avant la délivrance d'un signal de synchronisation par un KN, le KN sélectionne un intervalle balise qui se distingue des intervalles balises qu'utilisent ses voisins.

18. Procédé selon l'une quelconque des revendications 1 à 16, **caractérisé en ce que**, avant la délivrance du signal de synchronisation par un KN, le KN sélectionne un intervalle balise qui se distingue des intervalles balises qu'utilisent ses voisins et ses deuxièmes prochains voisins.

19. Procédé selon la revendication 16,
**caractérisé en ce qu'**une modification imminente pour un KN de son intervalle balise utilisé jusqu'à présent par le KN est envoyé en tant qu'information de données aux voisins respectifs, avant sa réalisation par le KN.

20. Procédé selon l'une quelconque des revendications 1 à 19, **caractérisé en ce que** chaque KN évalue notamment les signaux de synchronisation, ainsi que les données de son prédécesseur sélectionné qui sont en relation avec ce dernier et les compare avec les données mémorisées du signal de synchronisation précédemment réceptionné et en cas de divergences, il s'effectue une nouvelle détermination du prédécesseur selon l'étape de procédé e) selon la revendication 1.

21. Procédé selon l'une quelconque des revendications 1 à 20, **caractérisé en ce que** les protocoles TDMA (Time Division Multiple Access) (Accès Multiple à Répartition dans le Temps (AMRT), FDMA- (Frequency Division Multiple Access) (Accès Multiple par Répartition de Fréquence (AMRF)) ou CDMA (Code Division Multiple Access) (Accès Multiple par Répartition de Fréquence (AMRF)) sont utilisés pour la transmission de données.

22. Procédé selon l'une quelconque des revendications 1 à 21, **caractérisé en ce que** chaque noeud, ainsi que le noeud central disposent d'une propre identification, qui est transmise respectivement avec le signal de synchronisation.

23. Procédé selon la revendication 22,
**caractérisé en ce qu'**après sa synchronisation, un noeud envoie au noeud central un Syncsignal, qui comprend au moins son identification.

24. Procédé selon l'une quelconque des revendications 1 à 23,
**caractérisé en ce que** les trames comportent une structure de trame qui comporte au moins une zone de synchronisation, dans laquelle des intervalles balises sont transmis et au moins une zone de données, dans laquelle des données sont transmises.

25. Procédé selon la revendication 24,
**caractérisé en ce que** dans la zone de synchronisation et dans la zone de données, il est prévu respectivement pour chaque noeud un intervalle individuel, qui est déterminé par sa valeur de compteur de sauts et par son intervalle balise sélectionné.
